# EUROPÄISCHE PATENTANMELDUNG

(11) **EP 0 848 015 A1**
(43) Veröffentlichungstag der Anmeldung: **17.06.1998**
(21) Anmeldenummer: 97121287.3
(22) Anmeldetag: 04.12.1997
(51) Int. Cl.: C08F 4/60, C07F 17/00

(54) **Katalysator zur Herstellung von funktionalisierten Polymeren**

(30) Priorität: 11.12.1996 DE 19651442
(71) Anmelder: HOECHST AKTIENGESELLSCHAFT, 65929 Frankfurt am Main (DE)
(72) Erfinder: Erker, Gerhard, Prof. Dr., 48159 Münster (DE); Späther, Wolf, DCh., 48143 Münster (DE); Fritze, Cornelia, Dr., 60529 Frankfurt (DE); Mecking, Stefan, Dr., 63067 Offenbach (DE)

(57) **Zusammenfassung**

Die vorliegende Erfindung bezieht sich auf einen Katalysator, enthaltend (A) mindestens ein Bis(enolat) eines Metalls, wobei jede der beiden Enolat-Gruppen über genau eine Einfachbindung an das Metall gebunden ist und (B) mindestens eine chemische Verbindung als Cokatalysator.

## Beschreibung

Die vorliegende Erfindung betrifft einen Katalysator, der vorteilhaft zur Herstellung von Polymeren, die funktionelle Gruppen enthalten, eingesetzt werden kann und ein Verfahren zur Herstellung des Katalysators. Zudem wird ein Verfahren zur Herstellung von funktionalisierten Polymeren in Gegenwart des erfindungsgemäßen Katalysators beschrieben.

Die Verwendung von Koordinations-Katalysatoren des Ziegler-Typs für die Polymerisation von Olefinen, wie Ethylen und Propylen, ist wohl bekannt. Üblicherweise bestehen solche Katalysatoren aus einem Übergangsmetallverbindung, wie zum Beispiel einer halogenidhaltigen Titan- oder Zirkoniumverbindung, in Kombination mit einem Überschuß eines Cokatalysators, wie zum Beispiel einer Aluminoxan-Verbindung. In jüngerer Zeit ist die Aktivierung von geeigneten Übergangsmetallverbindungen mit stöchiometrischen Mengen eines Cokatalysators, wie einem [Ph₃C]⁺- oder [Me₂NPh]⁺- Salz eines nichtkoordinierenden Anions, beschrieben worden. Übergangsmetallverbindungen, welche ohne Zusatz eines Cokatalysators die Polymerisation von Olefinen bewirken sind ebenso bekannt. Die genannten Katalysatorsysteme sind jedoch im allgemeinen nicht für die Copolymerisation von unpolaren Olefinen mit polaren funktionalisierten Olefinen, wie zum Beispiel Acrylaten, geeignet. Eine allgemeine Übersicht über das in diesem Absatz aufgeführte Gebiet wird in Angewandte Chemie, **1995**, 107, 1255 - 1283 gegeben.

Die Polymerisation von polaren Olefinen, wie Methylmethacrylat (MMA), unter Verwendung von Verbindungen von Lanthanoiden oder der Metalle der III. bis VI. Nebengruppe des Periodensystems der Elemente ist bekannt. U.S. Patent 4,728,706 beschreibt eine lebende Polymerisation dieser Art unter Verwendung von Titan-, Zirkonium- oder Hafnium-Verbindungen. Die stereospezifische Polymerisation von MMA unter Verwendung von Verbindungen des Zirkoniums (Macromolecules, **1995**, 28, 3067 - 3073) oder von Lanthanoiden (J. Am. Chem. Soc. **1992**, 114, 4908) ist beschrieben worden. Blockcopolymere von 1-Olefinen CH=CHR¹ mit Acrylaten CH₂=CR²C(O)OR³ und deren Herstellung unter Verwendung von Verbindungen von seltenen Erden enthaltenden Polymerisationsstartern werden in EP-A-462588 offenbart.

Die im vorhergehenden Absatz beschriebenen Katalysator-Kompositionen beinhalten meist eine Metallalkyl- oder Metallhydrid-Verbindung in Verbindung mit einem Cokatalysator, oder ein Hydrid eines Metalls aus der Gruppe der seltenen Erden. Das oben erwähnte U. S. Pat. 4,728,706 beinhaltet die Verwendung von Enolat-Verbindungen (C₅H₅)₂MCl(O-C(OR¹)=CR²₂ (M = Ti, Zr, Hf) als Polymerisationsstarter. In J. Am. Chem. Soc. 1992, 114, 4908 wird die Darstellung eines Mono-enolates (C₅Me₅)₂Sm-[O=C(OMe)-CMe₂CH₂C(Me)= C(OMe)-O] und seine Verwendung zur Polymerisation von MMA beschrieben.

Die Aufgabe der vorliegenden Erfindung bestand darin eine neue Klasse von Katalysatoren zur Verfügung zu stellen, die sich zur Herstellung von funktionalisierten Polymeren eignet.

Gegenstand der vorliegenden Erfindung sind Katalysatoren für die Herstellung von funktionalisierten Polymeren, enthaltend (A) mindestens ein Bis(enolat) eines Metalls, in welchem jede der beiden Enolat-Gruppen über genau eine Einfachbindung an das Metall gebunden ist und (B) mindestens einer weiteren chemischen Verbindung als Cokatalysator sowie ein Verfahren zur Herstellung des Bis(enolats) und des Katalysators. Ein weiterer Gegenstand der Erfindung ist die Verwendung der Katalysatoren zur Herstellung von funktionalisierten Polymeren. Die hier beschriebene neue Klasse von Katalysatoren ist leicht zugänglich und liefert in hohen Aktivitäten funktionalisierte Polymere.

Der erfindungsgemäße Katalysator enthält (A) mindestens ein Bis(enolat) eines Metalls, wobei jede der beiden Enolat-Gruppen über genau eine Einfachbindung an das Metall gebunden ist, und (B) mindestens eine chemische Verbindung als Cokatalysator. Die Einfachbindung zwischen Metall und Enolat-Gruppe ist eine kovalente Bindung.

Die Katalysatorkomponente (A) ist bevorzugt eine metallorganische Verbindung der Formel I: 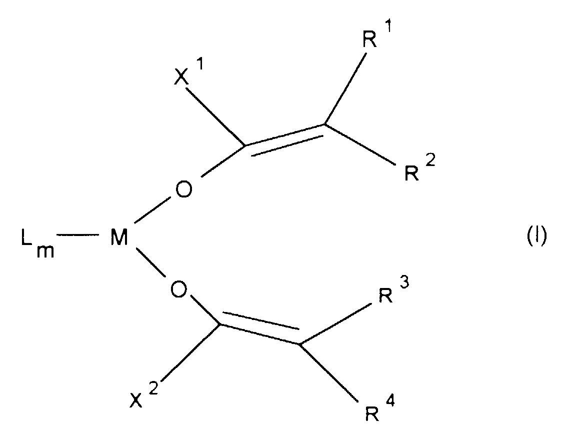 worin,
- L: ein Ligand ist,
- m: eine ganze Zahl von 1 bis 6 ist,
- M: ein Element der III., IV. oder V. Hauptgruppe oder ein Element der I. bis VIII. Nebengruppe des Periodensystems der Elemente ist,
- R¹, R², R³, R⁴: unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁-C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C₂-C₂₀-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl oder eine oder mehrere Reste R¹, R², R³ und R⁴ können mit L so verbunden sein, daß die Reste R¹,R², R³ und R⁴ und L sowie die sie verbindenden Atome ein C₃-C₂₄-Ringsystem bilden, welches seinerseits mit C₁-C₂₀-kohlenstoffhaltigen Resten substituiert sein kann, oder zwei oder mehrere Reste R¹, R², R³ und R⁴ können so miteinander verbunden sein, daß die Reste R¹ und R², R³ und R⁴, R¹ und R³, R¹ und R⁴, R² und R³ oder R² und R⁴ und die sie verbindenden Atome ein C₃-C₂₄-Ringsystem bilden, welches seinerseits mit C₁-C₂₀-kohlenstoffhaltigen Resten substituiert sein kann,
- X¹, X²: unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁-C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C₂-C₂₀-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl, oder X¹ und/oder X² können mit L so verbunden sein, daß die Reste X¹ und/oder X² mit L sowie die sie verbindenden Atome ein C₃-C₂₄-Ringsystem bilden, welches seinerseits mit C₁-C₂₀-kohlenstoffhaltigen Resten substituiert sein kann, oder zwei oder mehrere Reste R¹ und X¹, sowie R⁴ und X², können so miteinander verbunden sein, daß die Reste R¹ und X¹ sowie X² und R⁴ und die sie verbindenden Atome ein C₇-C₂₄-Ringsystem bilden, welches seinerseits mit (C₁-C₂₀)-kohlenstoffhaltigen Resten substituiert sein kann.

In Formel I ist bevorzugt,
- L: ein Ligand, z.B. ein π-Ligand wie unsubstituiertes oder substituiertes Cyclopentadienyl oder eine C₁-C₄₀ - kohlenstoffhaltige Gruppe wie C₁-C₄₀-Alkyl, C₂-C₄₀-Alkenyl, C₂-C₄₀-Alkadienyl, C₂-C₄₀-Alkadiendiyl, C₃-C₄₀-Alkylalkenyl, C₅-C₂₄-Aryl, C₅-C₂₄-Heteroaryl wie Pyridyl, Furyl, Chinolyl oder Boratabenzol, C₇-C₃₀-Alkylaryl, C₇-C₃₀-Arylalkyl oder NR'₃, PR'₃, R'₂N-R''-NR'₂, R'₂P-R''-PR'₂ oder R'S-R''-OR', wobei R' gleich oder verschieden ein Wasserstoffatom oder eine C₁-C₄₀-kohlenstoffhaltige Gruppe ist wie eine C₁-C₄₀ Alkyl z.B. Methyl, Ethyl, tert.-Butyl, Cyclohexyl oder Octyl, C₆-C₄₀-Aryl, C₇-C₄₀-Alkylaryl oder C₂-C₄₀-Alkenyl und wobei R'' eine C₁-C₄₀-Alkylen, C₁-C₄₀-Halogenalkylen, C₅-C₂₅-Arylen, C₅-C₂₅-Halogenarylen, C₆-C₄₀-Arylalkylen, C₆-C₄₀-Alkylarylen, C₆-C₄₀-Halogenarylalkylen, C₂-C₄₀-Alkinylen, C₂-C₄₀-Alkenylen
- m: eine ganze Zahl von 1 bis 6,
- M: ein Element der I. bis VII. Nebengruppe des Periodensystems der Elemente, insbesondere der III., IV., V., VI. oder VII. Nebengruppe des Periodensystems der Elemente,
- R¹, R², R³, R⁴: unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁-C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C₂-C₂₀-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl oder eine oder mehrere Reste R¹, R², R³ und R⁴ können mit L so verbunden sein, daß die Reste R¹,R², R³ und R⁴ und L sowie die sie verbindenden Atome ein C₃-C₂₄-Ringsystem bilden, welches seinerseits mit C₁-C₂₀-kohlenstoffhaltigen Resten substituiert sein kann, oder zwei oder mehrere Reste R¹, R², R³ und R⁴ können so miteinander verbunden sein, daß die Reste R¹ und R², R³ und R⁴, R¹ und R³, R¹ und R⁴, R² und R³ oder R² und R⁴ und die sie verbindenden Atome ein C₃-C₂₄-Ringsystem bilden, welches seinerseits mit C₁-C₂₀-kohlenstoffhaltigen Resten substituiert sein kann,
- X¹, X²: unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁₋ C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C₂-C₂₀-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl oder X¹ und/oder X² können mit L so verbunden sein können, daß die Reste X¹, X² und L sowie die sie verbindenden Atome ein C₃-C₂₄-Ringsystem bilden, welches seinerseits mit C₁-C₂₀-kohlenstoffhaltigen Resten substituiert sein kann, oder zwei oder mehrere Reste R¹ und X¹, sowie R⁴ und X², so miteinander verbunden sein können, daß die Reste R¹ und X¹ sowie X² und R⁴ und die sie verbindenden Atome ein C₇-C₂₄-Ringsystem bilden, welches seinerseits mit C₁-C₂₀-kohlenstoffhaltigen Resten substituiert sein kann.

Insbesondere bevorzugt ist M in der Formel I ein Übergangsmetall der III., IV., V. oder VI. Nebengruppe des Periodensystems der Elemente, an das mindestens ein π-Ligand, z.B. ein Cyclopentadienylligand gebunden ist. Das Metallzentralatom in Formel I ist insbesondere bevorzugt ein Element der IV. Nebengruppe des Periodensystems der Elemente wie Titan, Zirkonium oder Hafnium, an das ein oder zwei Cyclopentadienylliganden gebunden sind. Unter Cyclopentadienylligand sind unsubstituierte Cyclopentadienylreste und substituierte Cyclopentadienylreste wie Methylcyclopentadienyl, Trifluoromethylcyclopentadienyl, Pyridylcyclopentadienyl, Phenylcyclopentdienyl, Tetramethylcyclopentadienyl, Indenyl, 2-Methylindenyl, 2-Methyl-4-phenylindenyl, Tetrahydroindenyl, Benzoindenyl, Fluorenyl, Benzofluorenyl, Tetrahydrofluorenyl, Octahydrofluorenylreste zu verstehen. Der Indenylring ist bevorzugt substituiert, wobei auch zwei oder mehrere Substituenten des Indenylrings zusammen ein Ringsystem bilden können. Die π-Liganden, z. B. Cyclopentadienylliganden können verbrückt oder unverbrückt sein, wobei einfache und mehrfache Verbrückungen - auch über Ringsysteme - möglich sind. Besonders bevorzugt ist das Bis-(enolat) der Formel (I) ein Metallocen, welches verbrückt oder unverbrückt sein kann. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig, als auch voneinander verschieden sein. Beispiele solcher mehrkerniger Metallocene sind z. B. beschrieben in (EP-A-632063, JP-A-04/80214, JP-A-4/85310, EP-A-654476).

Insbesondere bevorzugt sind unverbrückte oder verbrückte Metallocene der Formel II, 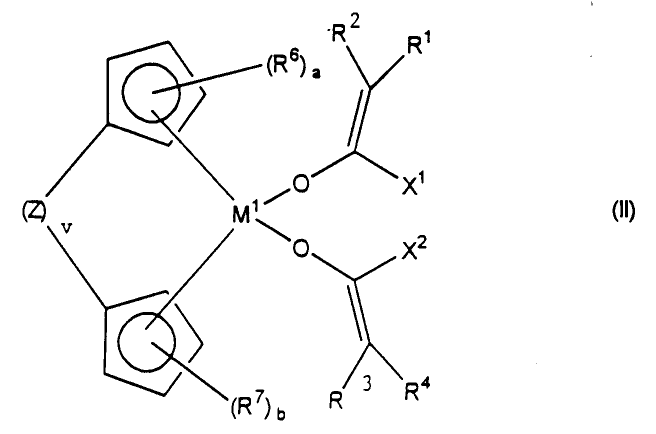 , worin
- M¹: ein Metall der III., IV., V. oder VI. Nebengruppe des Periodensystems der Elemente ist, insbesondere Titan, Zirkonium oder Hafnium,
- R⁶: gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁₋ C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy, oder zwei oder mehrere Reste R⁶ können so miteinander verbunden sein, daß die Reste R⁶ und die sie verbindenden Atome des Cyclopentadienylringes ein C₄-C₂₄-Ringsystem bilden, welches seinerseits substituiert sein kann,
- R⁷: gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits mit C₁-C₂₀-kohlenstoffhaltigen Resten substituiert sein kann,
- R¹, R², R³, R⁴: sind Reste wie in Formel I beschrieben,
- X¹, X²: sind Reste wie in Formel I beschrieben,
- a: gleich 5 für v = 0, und a gleich 4 für v = 1 ist,
- b: gleich 5 für v = 0, und b gleich 4 für v = 1 ist,
- Z: ein verbrückendes Strukturelement zwischen den beiden Cyclopentadienylringen bezeichnet, und v ist 0 oder 1.
Beispiele für Verbrückungen Z sind Gruppen M²R⁹R¹⁰, worin M² Kohlenstoff, Silizium, Germanium oder Zinn ist und R⁹ und R¹⁰ gleich oder verschieden eine C₁-C₂₀-kohlenstoffhaltige Gruppe wie eine C₁-C₂₀-Alkyl-, C₆-C₂₄-Aryl- oder eine C₁ -C₂₀-Heteroalkyl-, C₆-C₂₄-Heteroarylgruppe bedeuten. Bevorzugt ist Z gleich CH₂, CH₂CH₂, CH(CH₃)CH₂, CH(C₄H₉)C(CH₃)₂, (CH₃)₃C(CH₃)C, C(CH₃)₂, (CH₃)₂Si, (CH₃)₂Ge, (CH₃)₂Sn, (C₆H₅)₂Si, (C₆H₅)(CH₃)Si, (CH₃)₃Si(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R⁶ und/oder R⁷ ein mono- oder polycyclisches Ringsystem bilden.

Exemplare aber nicht limitierende Beispiele für die Komponente (A) des erfindungsgemäßen Katalysators sind:
Bis(cyclopentadienyl)titanbispropen-2-olat
Bis(tetramethylcyclopentadienyl)titanbispropen-2-olat
Bis(trimethylsilylcyclopentadienyl)titanbispropen-2-olat
Bis(trimethoxysilylcyclopentadienyl)titanbispropen-2-olat
Bis(isobutylcyclopentadienyl)titanbispropen-2-olat
Cyclopentadienylsamariumbispropen-2-olat
Methylcyclopentadienylsamariumbispropen-2-olat
Cyclopentadienyllanthanbispropen-2-olat
Methylcyclopentadienyllanthanbispropen-2-olat
Cyclopentadienylyttriumbispropen-2-olat
Methylcyclopentadienylyttriumbispropen-2-olat
Cyclopentadienylytterbiumbispropen-2-olat
Methylcyclopentadienylytterbiumbispropen-2-olat
Cyclopentadienylvanadiumbispropen-2-olat
Methylcyclopentadienylvanadiumbispropen-2-olat
Cyclopentadienylniobiumbispropen-2-olat
Methylcyclopentadienylniobiumbispropen-2-olat
Bis(3-butenylcyclopentadienyl)titanbispropen-2-olat
Bis(methylcyclopentadienyl)titanbispropen-2-olat
Bis(1-,3-di-tert.butylcyclopentadienyl)titanbispropen-2-olat
Bis(trifluoromethylcyclopentadienyl)titanbispropen-2-olat
Bis(tert.butylcyclopentadienyl)titanbispropen-2-olat
Bis(n-butylcyclopentadienyl)titanbispropen-2-olat
Bis(N,N-dimethylaminomethyl-cyclopentadienyl)titanbispropen-2-olat
Bis(N,N-dimethylaminocyclopentadienyl)titanbispropen-2-olat
Bis(diphenylboracyclopentadienyl)titanbispropen-2-olat
Bis[bis(pentafluorophenyl)boracyclopentadienyl]titanbispropen-2-olat
Bis(pentafluorophenylcyclopentadienyl)titanbispropen-2-olat
Bis(phenylcyclopentadienyl)titanbispropen-2-olat
Bis(1-tetrahydrofurylcyclopentadienyl)titanbispropen-2-olat
Bis(4-methylphenylcyclopentadienyl)titanbispropen-2-olat
Bis(4-methoxyphenylcyclopentadienyl)titanbispropen-2-olat
Bis(benzylcyclopentadienyl)titanbispropen-2-olat
Bis(1-,3-dimethylcyclopentadienyl)titanbispropen-2-olat
Bis(1-methyl-3-phenylcyclopentadienyl)titanbispropen-2-olat
Methylenbis(cyclopentadienyl)titanbispropen-2-olat
Methylenbis(3-trimethylsilylcyclopentadienyl)titanbispropen-2-olat
Methylenbis(3-trimethoxysilylcyclopentadienyl)titanbispropen-2-olat
Methylenbis(3-isobutylcyclopentadienyl)titanbispropen-2-olat
Methylenbis(3-(3-butenyl)cyclopentadienyl)titanbispropen-2-olat
Methylenbis(3-methylcyclopentadienyl)titanbispropen-2-olat
Methylenbis(3-trifluoromethylcyclopentadienyl)titanbispropen-2-olat
Methylenbis(3-tert.butylcyclopentadienyl)titanbispropen-2-olat
Methylenbis(3-n-butylcyclopentadienyl)titanbispropen-2-olat
Methylenbis(3-pentafluorophenylcyclopentadienyl)titanbispropen-2-olat
Methylenbis(3-phenylcyclopentadienyl)titanbispropen-2-olat
Methylenbis(3-(1-tetrahydrofuryl)cyclopentadienyl)titanbispropen-2-olat
Methylenbis(3-(4-methylphenyl)cyclopentadienyl)titanbispropen-2-olat
Methylenbis(3-(4-methoxyphenyl)cyclopentadienyl)titanbispropen-2-olat
Methylenbis(3-benzylcyclopentadienyl)titanbispropen-2-olat
Methylenbis(3-,4-dimethylcyclopentadienyl)titanbispropen-2-olat
Methylenbis(3-methyl-4-phenylcyclopentadienyl)titanbispropen-2-olat
Methylenbis(3-methyl-4-tert.butylcyclopentadienyl)titanbispropen-2-olat
Dimethylsilandiylbis(cyclopentadienyl)titanbispropen-2-olat
Dimethylsilandiylbis(tetramethylcyclopentadienyl)titanbispropen-2-olat
Dimethylsilandiylbis(3-trimethylsilylcyclopentadienyl)titanbispropen-2-olat
Dimethylsilandiylbis(3-trimethoxysilylcyclopentadienyl)titanbispropen-2-olat
Dimethylsilandiylbis(3-isobutylcyclopentadienyl)titanbispropen-2-olat
Dimethylsilandiylbis(3-(3-butenyl)cyclopentadienyl)titanbispropen-2-olat
Dimethylsilandiylbis(3-methylcyclopentadienyl)titanbispropen-2-olat
Dimethylsilandiylbis(3-trifluoromethylcyclopentadienyl)titanbispropen-2-olat
Dimethylsilandiylbis(3-tert.butylcyclopentadienyl)titanbispropen-2-olat
Dimethylsilandiylbis(3-n-butylcyclopentadienyl)titanbispropen-2-olat
Dimethylsilandiylbis(3-(N,N-dimethylaminomethyl)cyclopentadienyl)titanbispropen-2-olat
Dimethylsilandiylbis(3-(N,N-dimethylamino)cyclopentadienyl)titanbispropen-2-olat
Dimethylsilandiylbis(3-(diphenylboryl)cyclopentadienyl)titanbispropen-2-olat
Dimethylsilandiylbis[3-bis(pentafluorophenyl)boryl)cyclopentadienyl]titanbispropen-2-olat
Dimethylsilandiylbis(3-pentafluorophenylcyclopentadienyl)titanbispropen-2-olat
Dimethylsilandiylbis(3-phenylcyclopentadienyl)titanbispropen-2-olat
Dimethylsilandiylbis(3-(1-tetrahydrofuryl)cyclopentadienyl)titanbispropen-2-olat
Dimethylsilandiylbis(3-(4-methylphenyl)cyclopentadienyl)titanbispropen-2-olat
Dimethylsilandiylbis(3-(4-methoxy)phenylcyclopentadienyl)titanbispropen-2-olat
Dimethylsilandiylbis(3-benzylcyclopentadienyl)titanbispropen-2-olat
Dimethylsilandiylbis(3-,4-dimethylcyclopentadienyl)titanbispropen-2-olat
Dimethylsilandiylbis(3-methyl-4-phenylcyclopentadienyl)titanbispropen-2-olat
Dimethylsilandiylbis(3-methyl-4-tert.butylcyclopentadienyl)titanbispropen-2-olat
Isopropylidenbis(cyclopentadienyl)titanbispropen-2-olat
Isopropylidenbis(3-trimethylsilylcyclopentadienyl)titanbispropen-2-olat
Isopropylidenbis(3-isobutylcyclopentadienyl)titanbispropen-2-olat
Isopropylidenbis(3-(3-butenyl)cyclopentadienyl)titanbispropen-2-olat
Isopropylidenbis(3-methylcyclopentadienyl)titanbispropen-2-olat
Isopropylidenbis(3-trifluoromethylcyclopentadienyl)titanbispropen-2-olat
Isopropylidenbis(3-n-butylcyclopentadienyl)titanbispropen-2-olat
Isopropylidenbis(3-phenylcyclopentadienyl)titanbispropen-2-olat
Isopropylidenbis(3-(4-methylphenyl)cyclopentadienyl)titanbispropen-2-olat
Isopropylidenbis(3-(4-methoxyphenyl)cyclopentadienyl)titanbispropen-2-olat
Isopropylidenbis(3-benzylcyclopentadienyl)titanbispropen-2-olat
Isopropylidenbis(3-,4-dimethylcyclopentadienyl)titanbispropen-2-olat
Isopropylidenbis(3-methyl-4-phenylcyclopentadienyl)titanbispropen-2-olat
Isopropylidenbis(3-methyl-4-ter.butylcyclopentadienyl)titanbispropen-2-olat
1,2-Ethandiylbis(cyclopentadienyl)titanbispropen-2-olat
1,2-Ethandiylbis(3-trimethylsilylcyclopentadienyl)titanbispropen-2-olat
1,2-Ethandiylbis(3-isobutylcyclopentadienyl)titanbispropen-2-olat
1,2-Ethandiylbis(3-(3-butenyl)cyclopentadienyl)titanbispropen-2-olat
1,2-Ethandiylbis(3-methylcyclopentadienyl)titanbispropen-2-olat
1,2-Ethandiylbis(3-trifluoromethylcyclopentadienyl)titanbispropen-2-olat
1,2-Ethandiylbis(3-n-butylcyclopentadienyl)titanbispropen-2-olat
1,2-Ethandiylbis(3-phenylcyclopentadienyl)titanbispropen-2-olat
1,2-Ethandiylbis(3-(4-methylphenyl)cyclopentadienyl)titanbispropen-2-olat
1,2-Ethandiylbis(3-(4-methoxyphenyl)cyclopentadienyl)titanbispropen-2-olat
1,2-Ethandiylbis(3-benzylcyclopentadienyl)titanbispropen-2-olat
1,2-Ethandiylbis(3-,3-dimethylcyclopentadienyl)titanbispropen-2-olat
1,2-Ethandiylbis(3-methyl-4-phenylcyclopentadienyl)titanbispropen-2-olat
[4-(Cyclopentadienyl)-4,7,7-trimethyl(tetrahydroindenyl)]zirkoniumbispropen-2-olat
[4-(Cyclopentadienyl)-4,7-bispropen-2-olat-7-phenyl(5,6-bispropen-2-olattetrahydroindenyl)]zirkoniumbispropen-2-olat
[4-(Cyclopentadienyl)-4,7-bispropen-2-olat-7-(1-naphthyl)(7-phenyltetrahydroindenyl)]zirkoniumbispropen-2-olat
[4-(Cyclopentadienyl)-4,7-bispropen-2-olat-7-butyl(6,6-diethyltetrahydroindenyl)]zirkoniumbispropen-2-olat
[4-(3-tert-Butylcyclopentadienyl)-4,7,7-trimethyl(tetrahydroindenyl)]zirkoniumbispropen-2-olat
[4-(1-Indenyl)-4,7,7-trimethyl(tetrahydroindenyl)]zirkoniumbispropen-2-olat
Bis(indenyl)vanadiumbispropen-2-olat
Bis(fluorenyl)scandiumbispropen-2-olat
(Indenyl)(fluorenyl)niobiumbispropen-2-olat
(2-Methyl-7-naphthylindenyl)(2,6-di-tert-butylfluorenyl)titanbispropen-2-olat
(Pentamethylcyclopentadienyl)(tetrahydroindenyl)hafniumbromidmethyl
(Indenyl)(2-buten-4-ylcyclopentadienyl)titanbispropen-2-olat
[1,3-Bis(trimethylsilyl)cyclopentadienyl](3,4-benzofluorenyl)niobiumbispropen-2-olat
Propylen-2,2-bis(indenyl)zirkoniumbispropen-2-olat
Propylen-2,2-(cyclopentadienyl)(indenyl)zirkoniumbispropen-2-olat
Propylen-2,2-(cyclopentadienyl)(fluorenyl)zirkoniumbispropen-2-olat
(tert.butylamido)bispropen-2-olat(tetramethyl-5-cyclopentadienyl)silanzirkoniumbispropen-2-olat
Bis(2-methylbenzoindenyl)zirkoniumbispropen-2-olat
Isopropyliden(cyclopentadienyl)(fluorenyl)zirkoniumbispropen-2-olat
Isopropyliden(cyclopentadienyl)(indenyl)zirkoniumbispropen-2-olat
[4-(5-Cyclopentadienyl)-4,7,7-trimethyl-(5-4,5,6,7-tetrahydroindenyl)]zirkoniumbispropen-2-olat
Methylphenylmethylen-(fluorenyl)(cyclopentadienyl)zirkoniumbispropen-2-olat
Diphenylmethylen-(fluorenyl)(cyclopentadienyl)zirkoniumbispropen-2-olat
Isopropyliden-(3-methylcyclopentadienyl)(fluorenyl)zirkoniumbispropen-2-olat
Bis(indenyl)zirkoniumbispropen-2-olat
Bis(fluorenyl)zirkoniumbispropen-2-olat
(Indenyl)(fluorenyl)zirkoniumbispropen-2-olat
(3-Methyl-5-naphthylindenyl)(2,7-di-tert-butylfluorenyl)zirkoniumbispropen-2-olat
(3-Methyl-5-naphthylindenyl)(3,4,7-trimethoxyfluorenyl)zirkoniumbispropen-2-olat
(Pentamethylcyclopentadienyl)(tetrahydroindenyl)zirkoniumbispropen-2-olat
(Cyclopentadienyl)(1-octen-8-ylcyclopentadienyl)zirkoniumbispropen-2-olat
(Indenyl)(1-buten-4-ylcyclopentadienyl)zirkoniumbispropen-2-olat
[1,3-Bis(trimethylsilyl)cyclopentadienyl](3,4-benzofluorenyl)zirkoniumbispropen-2-olat
[4-(Cyclopentadienyl)-4,7,7-trimethyl(tetrahydroindenyl)]titanbispropen-2-olat
[4(Cyclopentadienyl)-4,7-bispropen-2-olat-7-phenyl(5,6-bispropen-2-olattetrahydroindenyl)]titanbispropen-2-olat
[4-(Cyclopentadienyl)-4,7-bispropen-2-olat-7-(1-naphthyl)(7-phenyltetrahydroindenyl)]titanbispropen-2-olat
[4-(Cyclopentadienyl)-4,7-bispropen-2-olat-7-butyl(6,6-diethyltetrahydroindenyl)]titanbispropen-2-olat
[4-(3-tert-Butylcyclopentadienyl)-4,7,7-trimethyl(tetrahydroindenyl)]titanbispropen-2-olat
[4-(1-Indenyl)-4,7,7-trimethyl(tetrahydroindenyl)]titanbispropen-2-olat
(2-Methyl-7-naphthylindenyl)(2,6-di-tert-butylfluorenyl)titanbispropen-2-olat
(Indenyl)(2-buten-4-ylcyclopentadienyl)titanbispropen-2-olat
[1,3-Bis(trimethylsilyl)cyclopentadienyl](3,4-benzofluorenyl)niobiumbispropen-2-olat
Propylen-2,2-bis(indenyl)titanbispropen-2-olat
Propylen-2,2-(cyclopentadienyl)(indenyl)titanbispropen-2-olat
Propylen-2,2-(cyclopentadoenyl)(fluorenyl)titanbispropen-2-olat
(tert.butylamido)bispropen-2-olat(tetramethyl-5-cyclopentadienyl)silantitanbispropen-2-olat
Bis(2-methylbenzoindenyl)titanbispropen-2-olat
Isopropyliden(cyclopentadienyl)(fluorenyl)titanbispropen-2-olat
Isopropyliden(cyclopentadienyl)(indenyl)titanbispropen-2-olat
[4-(5-Cyclopentadienyl)-4,7,7-trimethyl-(5-4,5,6,7-tetrahydroindenyl)]titanbispropen-2-olat
Methylphenylmethylen-(fluorenyl)(cyclopentadienyl)titanbispropen-2-olat
Diphenylmethylen-(fluorenyl)(cyclopentadienyl)titanbispropen-2-olat
Isopropyliden-(3-methylcyclopentadienyl)(fluorenyl)titanbispropen-2-olat
Bis(indenyl)titanbispropen-2-olat
Bis(fluorenyl)titanbispropen-2-olat
(Indenyl)(fluorenyl)titanbispropen-2-olat
(3-Methyl-5-naphthylindenyl)(2,7-di-tert-butylfluorenyl)titanbispropen-2-olat
(3-Methyl-5-naphthylindenyl)(3,4,7-trimethoxyfluorenyl)titanbispropen-2-olat
(Pentamethylcyclopentadienyl)(tetrahydroindenyl)titanbispropen-2-olat
(Cyclopentadienyl)(1-octen-8-ylcyclopentadienyl)titanbispropen-2-olat
(Indenyl)(1-buten-4-ylcyclopentadienyl)titanbispropen-2-olat
[1,3-Bis(trimethylsilyl)cyclopentadienyl](3,4-benzofluorenyl)titanbispropen-2-olat
Bis(cyclopentadienyl)zirkoniumbispropen-2-olat
Bis(1-,3-ditert.butylcyclopentadienyl)zirkoniumbispropen-2-olat
Bis(tetramethylcyclopentadienyl)zirkoniumbispropen-2-olat
Bis(trimethylsilylcyclopentadienyl)zirkoniumbispropen-2-olat
Bis(trimethoxysilylcyclopentadienyl)zirkoniumbispropen-2-olat
Bis(isobutylcyclopentadienyl)zirkoniumbispropen-2-olat
Bis(3-butenylcyclopentadienyl)zirkoniumbispropen-2-olat
Bis(methylcyclopentadienyl)zirkoniumbispropen-2-olat
Bis(trifluoromethylcyclopentadienyl)zirkoniumbispropen-2-olat
Bis(tert.butylcyclopentadienyl)zirkoniumbispropen-2-olat
Bis(n-butylcyclopentadienyl)zirkoniumbispropen-2-olat
Bis(N,N-dimethylaminomethyl-cyclopentadienyl)zirkoniumbispropen-2-olat
Bis(N,N-dimethylaminocyclopentadienyl)zirkoniumbispropen-2-olat
Bis(diphenylborylcyclopentadienyl)zirkoniumbispropen-2-olat
Bis[bis(pentafluorophenyl)borylcyclopentadienyl]zirkoniumbispropen-2-olat
Bis(pentafluorophenylcyclopentadienyl)zirkoniumbispropen-2-olat
Bis(phenylcyclopentadienyl)zirkoniumbispropen-2-olat
Bis(1-tetrahydrofurylcyclopentadienyl)zirkoniumbispropen-2-olat
Bis(4-methylphenylcyclopentadienyl)zirkoniumbispropen-2-olat
Bis(4-methoxyphenylcyclopentadienyl)zirkoniumbispropen-2-olat
Bis(benzylcyclopentadienyl)zirkoniumbispropen-2-olat
Bis(1-,3-dimethylcyclopentadienyl)zirkoniumbispropen-2-olat
Bis(1-methyl-3-phenylcyclopentadienyl)zirkoniumbispropen-2-olat
Cyclopentadienyleisenbispropen-2-olat
Trimethoxysilylcyclopentadienyleisenbispropen-2-olat
3-Butenylcyclopentadienyleisenbispropen-2-olat
Methylcyclopentadienyleisenbispropen-2-olat
Trifluoromethylcyclopentadienyleisenbispropen-2-olat
N,N-Dimethylaminocyclopentadienyleisenbispropen-2-olat
Methylenbis(cyclopentadienyl)zirkoniumbispropen-2-olat
Methylenbis(3-trimethylsilylcyclopentadienyl)zirkoniumbispropen-2-olat
Methylenbis(3-trimethoxysilylcyclopentadienyl)zirkoniumbispropen-2-olat
Methylenbis(3-isobutylcyclopentadienyl)zirkoniumbispropen-2-olat
Methylenbis(3-(3-butenyl)cyclopentadienyl)zirkoniumbispropen-2-olat
Methylenbis(3-methylcyclopentadienyl)zirkoniumbispropen-2-olat
Methylenbis(3-trifluoromethylcyclopentadienyl)zirkoniumbispropen-2-olat
Methylenbis(3-tert.butylcyclopentadienyl)zirkoniumbispropen-2-olat
Methylenbis(3-n-butylcyclopentadienyl)zirkoniumbispropen-2-olat
Methylenbis(3-pentafluorophenylcyclopentadienyl)zirkoniumbispropen-2-olat
Methylenbis(3-phenylcyclopentadienyl)zirkoniumbispropen-2-olat
Methylenbis(3-(1-tetrahydrofuryl)cyclopentadienyl)zirkoniumbispropen-2-olat
Methylenbis(3-(4-methylphenyl)cyclopentadienyl)zirkoniumbispropen-2-olat
Methylenbis(3-(4-methoxyphenyl)cyclopentadienyl)zirkoniumbispropen-2-olat
Methylenbis(3-benzylcyclopentadienyl)zirkoniumbispropen-2-olat
Methylenbis(3-,4-dimethylcyclopentadienyl)zirkoniumbispropen-2-olat
Methylenbis(3-methyl-4-phenylcyclopentadienyl)zirkoniumbispropen-2-olat
Dimethylsilandiylbis(cyclopentadienyl)zirkoniumbispropen-2-olat
Dimethylsilandiylbis(3-tetramethylcyclopentadienyl)zirkoniumbispropen-2-olat
Dimethylsilandiylbis(3-trimethylsilylcyclopentadienyl)zirkoniumbispropen-2-olat
Dimethylsilandiylbis(3-trimethoxysilylcyclopentadienyl)zirkoniumbispropen-2-olat
Dimethylsilandiylbis(3-isobutylcyclopentadienyl)zirkoniumbispropen-2-olat
Dimethylsilandiylbis(3-(3-butenyl)cyclopentadienyl)zirkoniumbispropen-2-olat
Dimethylsilandiylbis(3-methylcyclopentadienyl)zirkoniumbispropen-2-olat
Dimethylsilandiylbis(3-trifluoromethylcyclopentadienyl)zirkoniumbispropen-2-olat
Dimethylsilandiylbis(3-tert.butylcyclopentadienyl)zirkoniumbispropen-2-olat
Dimethylsilandiylbis(3-n-butylcyclopentadienyl)zirkoniumbispropen-2-olat
Dimethylsilandiylbis(3-(N,N-dimethylaminomethyl)cyclopentadienyl)zirkoniumbispropen-2-olat
Dimethylsilandiylbis(3-(N,N-dimethylamino)cyclopentadienyl)zirkoniumbispropen-2-olat
Dimethylsilandiylbis(3-diphenylborylcyclopentadienyl)zirkoniumbispropen-2-olat
Dimethylsilandiylbis[3-bis(pentafluorophenyl)borylcyclopentadienyl]zirkoniumbispropen-2-olat
Dimethylsilandiylbis(3-pentafluorophenylcyclopentadienyl)zirkoniumbispropen-2-olat
Dimethylsilandiylbis(3-phenylcyclopentadienyl)zirkoniumbispropen-2-olat
Dimethylsilandiylbis(3-(1-tetrahydrofuryl)cyclopentadienyl)zirkoniumbispropen-2-olat
Dimethylsilandiylbis(3-(4-methylphenyl)cyclopentadienyl)zirkoniumbispropen-2-olat
Dimethylsilandiylbis(3-(4-methoxyphenyl)cyclopentadienyl)zirkoniumbispropen-2-olat
Dimethylsilandiylbis(3-benzylcyclopentadienyl)zirkoniumbispropen-2-olat
Dimethylsilandiylbis(3-,4-dimethylcyclopentadienyl)zirkoniumbispropen-2-olat
Dimethylsilandiylbis(3-methyl-4-phenylcyclopentadienyl)zirkoniumbispropen-2-olat
Dimethylsilandiylbis(3-methyl-4-tert.butylcyclopentadienyl)zirkoniumbispropen-2-olat
Isopropylidenbis(cyclopentadienyl)zirkoniumbispropen-2-olat
Isopropylidenbis(3-trimethylsilylcyclopentadienyl)zirkoniumbispropen-2-olat
Isopropylidenbis(3-isobutylcyclopentadienyl)zirkoniumbispropen-2-olat
Isopropylidenbis(3-(3-butenyl)cyclopentadienyl)zirkoniumbispropen-2-olat
Isopropylidenbis(3-methylcyclopentadienyl)zirkoniumbispropen-2-olat
Isopropylidenbis(3-trifluoromethylcyclopentadienyl)zirkoniumbispropen-2-olat
Isopropylidenbis(3-n-butylcyclopentadienyl)zirkoniumbispropen-2-olat
Isopropylidenbis(3-phenylcyclopentadienyl)zirkoniumbispropen-2-olat
Isopropylidenbis(3-(4-methylphenyl)cyclopentadienyl)zirkoniumbispropen-2-olat
Isopropylidenbis(3-(4-methoxyphenyl)cyclopentadienyl)zirkoniumbispropen-2-olat
Isopropylidenbis(3-benzylcyclopentadienyl)zirkoniumbispropen-2-olat
Isopropylidenbis(3-,4-dimethylcyclopentadienyl)zirkoniumbispropen-2-olat
Isopropylidenbis(3-methyl-4-phenylcyclopentadienyl)zirkoniumbispropen-2-olat
1,2-Ethandiylbis(cyclopentadienyl)zirkoniumbispropen-2-olat
1,2-Ethandiylbis(3-trimethylsilylcyclopentadienyl)zirkoniumbispropen-2-olat
1,2-Ethandiylbis(3-isobutylcyclopentadienyl)zirkoniumbispropen-2-olat
1,2-Ethandiylbis(3-(3-butenyl)cyclopentadienyl)zirkoniumbispropen-2-olat
1,2-Ethandiylbis(3-methylcyclopentadienyl)zirkoniumbispropen-2-olat
1,2-Ethandiylbis(3-trifluoromethylcyclopentadienyl)zirkoniumbispropen-2-olat
1,2-Ethandiylbis(3-n-butylcyclopentadienyl)zirkoniumbispropen-2-olat
1,2-Ethandiylbis(3-phenylcyclopentadienyl)zirkoniumbispropen-2-olat
1,2-Ethandiylbis(3-(4-methylphenyl)cyclopentadienyl)zirkoniumbispropen-2-olat
1,2-Ethandiylbis(3-(4-methoxyphenyl)cyclopentadienyl)zirkoniumbispropen-2-olat
1,2-Ethandiylbis(3-benzylcyclopentadienyl)zirkoniumbispropen-2-olat
1,2-Ethandiylbis(3-,4-dimethylcyclopentadienyl)zirkoniumbispropen-2-olat
1,2-Ethandiylbis(3-methyl-4-phenylcyclopentadienyl)zirkoniumbispropen-2-olat
Bis(cyclopentadienyl)hafniumbispropen-2-olat
Bis(1-,3-ditert.butylcyclopentadienyl)hafniumbispropen-2-olat
Bis(tetramethylcyclopentadienyl)hafniumbispropen-2-olat
Bis(trimethylsilylcyclopentadienyl)hafniumbispropen-2-olat
Bis(trimethoxysilylcyclopentadienyl)hafniumbispropen-2-olat
Bis(isobutylcyclopentadienyl)hafniumbispropen-2-olat
Bis(3-butenylcyclopentadienyl)hafniumbispropen-2-olat
Bis(methylcyclopentadienyl)hafniumbispropen-2-olat
Bis(trifluoromethylcyclopentadienyl)hafniumbispropen-2-olat
Bis(tert.butylcyclopentadienyl)hafniumbispropen-2-olat
Bis(n-butylcyclopentadienyl)hafniumbispropen-2-olat
Bis(N,N-dimethylaminomethyl-cyclopentadienyl)hafniumbispropen-2-olat
Bis(N,N-dimethylaminocyclopentadienyl)hafniumbispropen-2-olat
Bis(diphenylborylcyclopentadienyl)hafniumbispropen-2-olat
Bis[bis(pentafluorophenyl)borylcyclopentadienyl]hafniumbispropen-2-olat
Bis(pentafluorophenylcyclopentadienyl)hafniumbispropen-2-olat
Bis(phenylcyclopentadienyl)hafniumbispropen-2-olat
Bis(1-tetrahydrofurylcyclopentadienyl)hafniumbispropen-2-olat
Bis(4-methylphenylcyclopentadienyl)hafniumbispropen-2-olat
Bis(4-methoxyphenylcyclopentadienyl)hafniumbispropen-2-olat
Bis(benzylcyclopentadienyl)hafniumbispropen-2-olat
Bis(1-,3-dimethylcyclopentadienyl)hafniumbispropen-2-olat
Bis(1-methyl-3-phenylcyclopentadienyl)hafniumbispropen-2-olat
Methylenbis(cyclopentadienyl)hafniumbispropen-2-olat
Methylenbis(3-trimethylsilylcyclopentadienyl)hafniumbispropen-2-olat
Methylenbis(3-trimethoxysilylcyclopentadienyl)hafniumbispropen-2-olat
Methylenbis(3-isobutylcyclopentadienyl)hafniumbispropen-2-olat
Methylenbis(3-(3-butenyl)cyclopentadienyl)hafniumbispropen-2-olat
Methylenbis(3-methylcyclopentadienyl)hafniumbispropen-2-olat
Methylenbis(3-trifluoromethylcyclopentadienyl)hafniumbispropen-2-olat
Methylenbis(3-tert.butylcyclopentadienyl)hafniumbispropen-2-olat
Methylenbis(3-n-butylcyclopentadienyl)hafniumbispropen-2-olat
Methylenbis(3-pentafluorophenylcyclopentadienyl)hafniumbispropen-2-olat
Methylenbis(3-phenylcyclopentadienyl)hafniumbispropen-2-olat
Methylenbis(3-(1-tetrahydrofuryl)cyclopentadienyl)hafniumbispropen-2-olat
Methylenbis(3-(4-methylphenyl)cyclopentadienyl)hafniumbispropen-2-olat
Methylenbis(3-(4-methoxyphenyl)cyclopentadienyl)hafniumbispropen-2-olat
Methylenbis(3-benzylcyclopentadienyl)hafniumbispropen-2-olat
Methylenbis(3-,4-dimethylcyclopentadienyl)hafniumbispropen-2-olat
Methylenbis(3-methyl-4-phenylcyclopentadienyl)hafniumbispropen-2-olat
Dimethylsilandiylbis(cyclopentadienyl)hafniumbispropen-2-olat
Dimethylsilandiylbis(3-tetramethylcyclopentadienyl)hafniumbispropen-2-olat
Dimethylsilandiylbis(3-trimethylsilylcyclopentadienyl)hafniumbispropen-2-olat
Dimethylsilandiylbis(3-trimethoxysilylcyclopentadienyl)hafniumbispropen-2-olat
Dimethylsilandiylbis(3-isobutylcyclopentadienyl)hafniumbispropen-2-olat
Dimethylsilandiylbis(3-(3-butenyl)cyclopentadienyl)hafniumbispropen-2-olat
Dimethylsilandiylbis(3-methylcyclopentadienyl)hafniumbispropen-2-olat
Dimethylsilandiylbis(3-trifluoromethylcyclopentadienyl)hafniumbispropen-2-olat
Dimethylsilandiylbis(3-tert.butylcyclopentadienyl)hafniumbispropen-2-olat
Dimethylsilandiylbis(3-n-butylcyclopentadienyl)hafniumbispropen-2-olat
Dimethylsilandiylbis(3-(N,N-dimethylaminomethyl)cyclopentadienyl)hafniumbispropen-2-olat
Dimethylsilandiylbis(3-(N,N-dimethylamino)cyclopentadienyl)hafniumbispropen-2-olat
Dimethylsilandiylbis(3-diphenylborylcyclopentadienyl)hafniumbispropen-2-olat
Dimethylsilandiylbis[3-bis(pentafluorophenyl)borylcyclopentadienyl]hafniumbispropen-2-olat
Dimethylsilandiylbis(3-pentafluorophenylcyclopentadienyl)hafniumbispropen-2-olat
Dimethylsilandiylbis(3-phenylcyclopentadienyl)hafniumbispropen-2-olat
Dimethylsilandiylbis(3-(1-tetrahydrofuryl)cyclopentadienyl)hafniumbispropen-2-olat
Dimethylsilandiylbis(3-(4-methylphenyl)cyclopentadienyl)hafniumbispropen-2-olat
Dimethylsilandiylbis(3-(4-methoxyphenyl)cyclopentadienyl)hafniumbispropen-2-olat
Dimethylsilandiylbis(3-benzylcyclopentadienyl)hafniumbispropen-2-olat
Dimethylsilandiylbis(3-,4-dimethylcyclopentadienyl)hafniumbispropen-2-olat
Dimethylsilandiylbis(3-methyl-4-phenylcyclopentadienyl)hafniumbispropen-2-olat
Dimethylsilandiylbis(3-methyl-4-tert.butylcyclopentadienyl)hafniumbispropen-2-olat
Isopropylidenbis(cyclopentadienyl)hafniumbispropen-2-olat
Isopropylidenbis(3-trimethylsilylcyclopentadienyl)hafniumbispropen-2-olat
Isopropylidenbis(3-isobutylcyclopentadienyl)hafniumbispropen-2-olat
Isopropylidenbis(3-(3-butenyl)cyclopentadienyl)hafniumbispropen-2-olat
Isopropylidenbis(3-methylcyclopentadienyl)hafniumbispropen-2-olat
Isopropylidenbis(3-trifluoromethylcyclopentadienyl)hafniumbispropen-2-olat
Isopropylidenbis(3-n-butylcyclopentadienyl)hafniumbispropen-2-olat
Isopropylidenbis(3-phenylcyclopentadienyl)hafniumbispropen-2-olat
Isopropylidenbis(3-(4-methylphenyl)cyclopentadienyl)hafniumbispropen-2-olat
Isopropylidenbis(3-(4-methoxyphenyl)cyclopentadienyl)hafniumbispropen-2-olat
Isopropylidenbis(3-benzylcyclopentadienyl)hafniumbispropen-2-olat
Isopropylidenbis(3-,4-dimethylcyclopentadienyl)hafniumbispropen-2-olat
Isopropylidenbis(3-methyl-4-phenylcyclopentadienyl)hafniumbispropen-2-olat
1,2-Ethandiylbis(cyclopentadienyl)hafniumbispropen-2-olat
1,2-Ethandiylbis(3-trimethylsilylcyclopentadienyl)hafniumbispropen-2-olat
1,2-Ethandiylbis(3-isobutylcyclopentadienyl)hafniumbispropen-2-olat
1,2-Ethandiylbis(3-(3-butenyl)cyclopentadienyl)hafniumbispropen-2-olat
1,2-Ethandiylbis(3-methylcyclopentadienyl)hafniumbispropen-2-olat
1,2-Ethandiylbis(3-trifluoromethylcyclopentadienyl)hafniumbispropen-2-olat
1,2-Ethandiylbis(3-n-butylcyclopentadienyl)hafniumbispropen-2-olat
1,2-Ethandiylbis(3-phenylcyclopentadienyl)hafniumbispropen-2-olat
1,2-Ethandiylbis(3-(4-methylphenyl)cyclopentadienyl)hafniumbispropen-2-olat
1,2-Ethandiylbis(3-(4-methoxyphenyl)cyclopentadienyl)hafniumbispropen-2-olat
1,2-Ethandiylbis(3-benzylcyclopentadienyl)hafniumbispropen-2-olat
1,2-Ethandiylbis(3-,4-dimethylcyclopentadienyl)hafniumbispropen-2-olat
1,2-Ethandiylbis(3-methyl-4-phenylcyclopentadienyl)hafniumbispropen-2-olat
Bisindenylzirkoniumbispropen-2-olat
Bis(tetrahydroindenyl)zirkoniumbispropen-2-olat
Bis(2-methylindenyl)zirkoniumbispropen-2-olat
Bis(2-phenylindenyl)zirkoniumbispropen-2-olat
Bis(2-methyltetrahydroindenyl)zirkoniumbispropen-2-olat
Bis(2-phenyllindenyl)zirkoniumbispropen-2-olat
Bis(2-(4-fluorophenyl)lindenyl)zirkoniumbispropen-2-olat
Bis(2-(4-methoxyphenyl)lindenyl)zirkoniumbispropen-2-olat
Bis(2-(4-methylphenyl)lindenyl)zirkoniumbispropen-2-olat
Bis(2-methyl-4-methylindenyl)zirkoniumbispropen-2-olat
Bis(2-methyl-4-trifluoromethylindenyl)zirkoniumbispropen-2-olat
Bis(2-trifluoromethylindenyl)zirkoniumbispropen-2-olat
Dimethylsilandiylbis(indenyl)zirkoniumbispropen-2-olat
Dimethylsilandiylbis(4-naphthyl-indenyl)zirkoniumbispropen-2-olat
Dimethylsilandiylbis(2-methyl-indenyl)zirkoniumbispropen-2-olat
Dimethylsilandiylbis(2-methyl-4-(1-naphthyl)-indenyl)zirkoniumbispropen-2-olat
Dimethylsilandiylbis(2-methyl-4-phenyl-indenyl)zirkoniumbispropen-2-olat
Dimethylsilandiylbis(2-methyl-4-tert.butyl-indenyl)zirkoniumbispropen-2-olat
Dimethylsilandiylbis(2-methyl-4-ethyl-indenyl)zirkoniumbispropen-2-olat
Dimethylsilandiylbis(2-ethyl-indenyl)zirkoniumbispropen-2-olat
Dimethylsilandiylbis(2-ethyl-4-ethyl-indenyl)zirkoniumbispropen-2-olat
Dimethylsilandiybis(2-methyl-4,5-benzo-indenyl)zirkoniumbispropen-2-olat
Dimethylsilandiylbis(2,4,6-trimethyl-indenyl)zirkoniumbispropen-2-olat
Dimethylsilandiylbis(2,4,7-trimethyl-indenyl)zirkoniumbispropen-2-olat
Dimethylsilandiylbis(2-methyl-5-isobutyl-indenyl)zirkoniumbispropen-2-olat
Dimethylsilandiylbis[2-methyl-4-(4-fluorophenyl)indenyl]zirkoniumbispropen-2-olat
Dimethylsilandiylbis[2-methyl-4-(4-methoxyphenyl)indenyl]zirkoniumbispropen-2-olat
Dimethylsilandiylbis[2-methyl-4-(4-(trifluoromethyl)phenyl)indenyl]zirkoniumbispropen-2-olat
Dimethylsilandiylbis[2-methyl-4-(4-(N,N-dimethylamino)phenyl)indenyl]zirkoniumbispropen-2-olat
Dimethylsilandiylbis[2-methyl-4-(4-methylphenyl)indenyl]zirkoniumbispropen-2-olat
Dimethylsilandiylbis[2-methyl-2-(4-fluorophenyl)indenyl]zirkoniumbispropen-2-olat
Dimethylsilandiylbis[2-methyl-4-(2-methoxyphenyl)indenyl]zirkoniumbispropen-2-olat
Dimethylsilandiylbis[2-methyl-4-(2-(trifluoromethyl)phenyl)indenyl]zirkoniumbispropen-2-olat
Dimethylsilandiylbis[2-methyl-4-(2-(N,N-dimethylamino)phenyl)indenyl]zirkoniumbispropen-2-olat
Dimethylsilandiylbis[2-methyl-4-(2-methylphenyl)indenyl]zirkoniumbispropen-2-olat
Dimethylsilandiylbis[2-methyl-4-pyridylindenyl]zirkoniumbispropen-2-olat
Dimethylsilandiylbis[2-ethyl-4-(2-methylphenyl)indenyl]zirkoniumbispropen-2-olat
Dimethylsilandiylbis[2-ethyl-4-pyridylindenyl]zirkoniumbispropen-2-olat
Dimethylsilandiylbis[2-ethyl-4-(4-methylphenyl)indenyl]zirkoniumbispropen-2-olat
Dimethylsilandiylbis[2-ethyl-2-(4-fluorophenyl)indenyl]zirkoniumbispropen-2-olat
Dimethylsilandiylbis[2-propenyl-4-methylindenyl]zirkoniumbispropen-2-olat
Dimethylsilandiylbis[2-propenyl-4-phenylindenyl]zirkoniumbispropen-2-olat
Dimethylsilandiylbis[2-phenyl-4-methylindenyl]zirkoniumbispropen-2-olat
Dimethylsilandiylbis[2, 4-diphenylindenyl]zirkoniumbispropen-2-olat
Dimethylsilandiylbis(4,5-dihydro-8-methyl-7H-cyclopent[e]acenaphthylen-7-yliden)zirkoniumbispropen-2-olat
Methyl(phenyl)silandiylbis(indenyl)zirkoniumbispropen-2-olat
Methyl(phenyl)silandiylbis(4-naphthyl-indenyl)zirkoniumbispropen-2-olat
Methyl(phenyl)silandiylbis(2-methyl-indenyl)zirkoniumbispropen-2-olat
Methyl(phenyl)silandiylbis(2-methyl-4-(1-naphthyl)-indenyl)zirkoniumbispropen-2-olat
Methyl(phenyl)silandiylbis(2-methyl-4-phenyl-indenyl)zirkoniumbispropen-2-olat
Methyl(phenyl)silandiylbis(2-methyl-4-tert.butyl-indenyl)zirkoniumbispropen-2-olat
Methyl(phenyl)silandiylbis(2-methyl-4-ethyl-indenyl)zirkoniumbispropen-2-olat
Methyl(phenyl)silandiylbis(2-ethyl-indenyl)zirkoniumbispropen-2-olat
Methyl(phenyl)silandiylbis(2-ethyl-4-ethyl-indenyl)zirkoniumbispropen-2-olat
Dimethylsilandiybis(2-methyl-4,5-benzo-indenyl)zirkoniumbispropen-2-olat
Methyl(phenyl)silandiylbis(2,4,6-trimethyl-indenyl)zirkoniumbispropen-2-olat
Methyl(phenyl)silandiylbis(2,4,7-trimethyl-indenyl)zirkoniumbispropen-2-olat
Methyl(phenyl)silandiylbis(2-methyl-5-isobutyl-indenyl)zirkoniumbispropen-2-olat
Methyl(phenyl)silandiylbis[2-methyl-4-(4-fluorophenyl)indenyl]zirkoniumbispropen-2-olat
Methyl(phenyl)silandiylbis[2-methyl-4-(4-methoxyphenyl)indenyl]zirkoniumbispropen-2-olat
Methyl(phenyl)silandiylbis[2-methyl-4-(4-(trifluoromethyl)phenyl)indenyl]zirkoniumbispropen-2-olat
Methyl(phenyl)silandiylbis[2-methyl-4-(4-(N,N-dimethylamino)phenyl)indenyl]zirkoniumbispropen-2-olat
Methyl(phenyl)silandiylbis[2-methyl-4-(4-methylphenyl)indenyl]zirkoniumbispropen-2-olat
Methyl(phenyl)silandiylbis[2-methyl-2-(4-fluorophenyl)indenyl]zirkoniumbispropen-2-olat
Methyl(phenyl)silandiylbis[2-methyl-4-(2-methoxyphenyl)indenyl]zirkoniumbispropen-2-olat
Methyl(phenyl)silandiylbis[2-methyl-4-(2-(trifluoromethyl)phenyl)indenyl]zirkoniumbispropen-2-olat
Methyl(phenyl)silandiylbis[2-methyl-4-(2-(N,N-dimethylamino)phenyl)indenyl]zirkoniumbispropen-2-olat
Methyl(phenyl)silandiylbis[2-methyl-4-(2-methylphenyl)indenyl]zirkoniumbispropen-2-olat
Methyl(phenyl)silandiylbis[2-methyl-4-pyridylindenyl]zirkoniumbispropen-2-olat
Methyl(phenyl)silandiylbis[2-ethyl-4-(2-methylphenyl)indenyl]zirkoniumbispropen-2-olat
Methyl(phenyl)silandiylbis[2-ethyl-4-pyridylindenyl]zirkoniumbispropen-2-olat
Methyl(phenyl)silandiylbis[2-ethyl-4-(4-methylphenyl)indenyl]zirkoniumbispropen-2-olat
Methyl(phenyl)silandiylbis[2-ethyl-2-(4-fluorophenyl)indenyl]zirkoniumbispropen-2-olat
Methyl(phenyl)silandiylbis[2-propenyl-4-methylindenyl]zirkoniumbispropen-2-olat
Methyl(phenyl)silandiylbis[2-propenyl-4-phenylindenyl]zirkoniumbispropen-2-olat
Methyl(phenyl)silandiylbis[2-phenyl-4-methylindenyl]zirkoniumbispropen-2-olat
Methyl(phenyl)silandiylbis[2, 4-diphenylindenyl]zirkoniumbispropen-2-olat
Methyl(phenyl)silandiylbis(4,5-dihydro-8-methyl-7H-cyclopent[e]acenaphthylen-7-yliden)zirkoniumbispropen-2-olat
Isopropylidenbis(indenyl)zirkoniumbispropen-2-olat
Isopropylidenbis(4-naphthyl-indenyl)zirkoniumbispropen-2-olat
Isopropylidenbis(2-methyl-indenyl)zirkoniumbispropen-2-olat
Isopropylidenbis(2-methyl-4-(1-naphthyl)-indenyl)zirkoniumbispropen-2-olat
Isopropylidenbis(2-methyl-4-phenyl-indenyl)zirkoniumbispropen-2-olat
Isopropylidenbis(2-methyl-4-tert.butyl-indenyl)zirkoniumbispropen-2-olat
Isopropylidenbis(2-methyl-4-ethyl-indenyl)zirkoniumbispropen-2-olat
Isopropylidenbis(2-ethyl-indenyl)zirkoniumbispropen-2-olat
Isopropylidenbis(2-ethyl-4-ethyl-indenyl)zirkoniumbispropen-2-olat
Dimethylsilandiybis(2-methyl-4,5-benzoindenyl)zirkoniumbispropen-2-olat
Isopropylidenbis(2,4,6-trimethyl-indenyl)zirkoniumbispropen-2-olat
Isopropylidenbis(2,4,7-trimethyl-indenyl)zirkoniumbispropen-2-olat
Isopropylidenbis(2-methyl-5-isobutyl-indenyl)zirkoniumbispropen-2-olat
Isopropylidenbis[2-methyl-4-(4-fluorophenyl)indenyl]zirkoniumbispropen-2-olat
Isopropylidenbis[2-methyl-4-(4-methoxyphenyl)indenyl]zirkoniumbispropen-2-olat
Isopropylidenbis[2-methyl-4-(4-(trifluoromethyl)phenyl)indenyl]zirkoniumbispropen-2-olat
Isopropylidenbis[2-methyl-4-(4-(N,N-dimethylamino)phenyl)indenyl]zirkoniumbispropen-2-olat
Isopropylidenbis[2-methyl-4-(4-methylphenyl)indenyl]zirkoniumbispropen-2-olat
Isopropylidenbis[2-methyl-2-(4-fluorophenyl)indenyl]zirkoniumbispropen-2-olat
Isopropylidenbis[2-methyl-4-(2-methoxyphenyl)indenyl]zirkoniumbispropen-2-olat
Isopropylidenbis[2-methyl-4-(2-trifluoromethyl)phenyl)indenyl]zirkoniumbispropen-2-olat
Isopropylidenbis[2-methyl-4-(2-(N,N-dimethylamino)phenyl)indenyl]zirkoniumbispropen-2-olat
Isopropylidenbis[2-methyl-4-(2-methylphenyl)indenyl]zirkoniumbispropen-2-olat
Isopropylidenbis[2-methyl-4-pyridylindenyl]zirkoniumbispropen-2-olat
Isopropylidenbis[2-ethyl-4-(2-methylphenyl)indenyl]zirkoniumbispropen-2-olat
Isopropylidenbis[2-ethyl-4-pyridylindenyl]zirkoniumbispropen-2-olat
Isopropylidenbis[2-ethyl-4-(4-methylphenyl)indenyl]zirkoniumbispropen-2-olat
Isopropylidenbis[2-ethyl-2-(4-fluorophenyl)indenyl]zirkoniumbispropen-2-olat
Isopropylidenbis[2-propenyl-4-methylindenyl]zirkoniumbispropen-2-olat
Isopropylidenbis[2-propenyl-4-phenylindenyl]zirkoniumbispropen-2-olat
Isopropylidenbis[2-phenyl-4-methylindenyl]zirkoniumbispropen-2-olat
Isopropylidenbis[2, 4-diphenylindenyl]zirkoniumbispropen-2-olat
Isopropylidenbis(4,5-dihydro-8-methyl-7H-cyclopent[e]acenaphthylen-7-yliden)zirkoniumbispropen-2-olat
Methylenbis(indenyl)zirkoniumbispropen-2-olat
Methylenbis(4-naphthyl-indenyl)zirkoniumbispropen-2-olat
Methylenbis(2-methyl-indenyl)zirkoniumbispropen-2-olat
Methylenbis(2-methyl-4-(1-naphthyl)-indenyl)zirkoniumbispropen-2-olat
Methylenbis(2-methyl-4-phenyl-indenyl)zirkoniumbispropen-2-olat
Methylenbis(2-methyl-4-tert.butyl-indenyl)zirkoniumbispropen-2-olat
Methylenbis(2-methyl-4-ethyl-indenyl)zirkoniumbispropen-2-olat
Methylenbis(2-ethyl-indenyl)zirkoniumbispropen-2-olat
Methylenbis(2-ethyl-4-ethylindenyl)zirkoniumbispropen-2-olat
Dimethylsilandiybis(2-methyl-4,5-benzo-indenyl)zirkoniumbispropen-2-olat
Methylenbis(2,4,6-trimethylindenyl)zirkoniumbispropen-2-olat
Methylenbis(2,4,7-trimethyl-indenyl)zirkoniumbispropen-2-olat
Methylenbis(2-methyl-5-isobutyl-indenyl)zirkoniumbispropen-2-olat
Methylenbis[2-methyl-4-(4-fluorophenyl)indenyl]zirkoniumbispropen-2-olat
Methylenbis[2-methyl-4-(4-methoxyphenyl)indenyl]zirkoniumbispropen-2-olat
Methylenbis[2-methyl-4-(4-(trifluoromethyl)phenyl)indenyl]zirkoniumbispropen-2-olat
Methylenbis[2-methyl-4-(4-(N,N-dimethylamino)phenyl)indenyl]zirkoniumbispropen-2-olat
Methylenbis[2-methyl-4-(4-methylphenyl)indenyl]zirkoniumbispropen-2-olat
Methylenbis[2-methyl-2-(4-fluorophenyl)indenyl]zirkoniumbispropen-2-olat
Methylenbis[2-methyl-4-(2-methoxyphenyl)indenyl]zirkoniumbispropen-2-olat
Methylenbis[2-methyl-4-(2-(trifluoromethyl)phenyl)indenyl]zirkoniumbispropen-2-olat
Methylenbis[2-methyl-4-(2-(N,N-dimethylamino)phenyl)indenyl]zirkoniumbispropen-2-olat
Methylenbis[2-methyl-4-(2-methylphenyl)indenyl]zirkoniumbispropen-2-olat
Methylenbis[2-methyl-4-pyridylindenyl]zirkoniumbispropen-2-olat
Methylenbis[2-ethyl-4-(2-methylphenyl)indenyl]zirkoniumbispropen-2-olat
Methylenbis[2-ethyl-4-pyridylindenyl]zirkoniumbispropen-2-olat
Methylenbis[2-ethyl-4-(4-methylphenyl)indenyl]zirkoniumbispropen-2-olat
Methylenbis[2-ethyl-2-(4-fluorophenyl)indenyl]zirkoniumbispropen-2-olat
Methylenbis[2-propenyl-4-methylindenyl]zirkoniumbispropen-2-olat
Methylenbis[2-propenyl-4-phenylindenyl]zirkoniumbispropen-2-olat
Methylenbis[2-phenyl-4-methylindenyl]zirkoniumbispropen-2-olat
Methylenbis[2, 4-diphenylindenyl]zirkoniumbispropen-2-olat
Methylenbis(4,5-dihydro-8-methyl-7H-cyclopent[e]acenaphthylen-7-yliden)zirkoniumbispropen-2-olat
Bisindenyltitanbispropen-2-olat
Bis(tetrahydroindenyl)titanbispropen-2-olat
Bis(2-methylindenyl)titanbispropen-2-olat
Bis(2-phenylindenyl)titanbispropen-2-olat
Bis(2-methyltetrahydroindenyl)titanbispropen-2-olat
Bis(2-phenyllindenyl)titanbispropen-2-olat
Bis(2-(4-fluorophenyl)lindenyl)titanbispropen-2-olat
Bis(2-(4-methoxyphenyl)lindenyl)titanbispropen-2-olat
Bis(2-(4-methylphenyl)lindenyl)titanbispropen-2-olat
Bis(2-methyl-4-methylindenyl)titanbispropen-2-olat
Bis(2-methyl-4-trifluoromethylindenyl)titanbispropen-2-olat
Bis(2-trifluoromethylindenyl)titanbispropen-2-olat
Dimethylsilandiylbis(indenyl)titanbispropen-2-olat
Dimethylsilandiylbis(4-naphthyl-indenyl)titanbispropen-2-olat
Dimethylsilandiylbis(2-methyl-indenyl)titanbispropen-2-olat
Dimethylsilandiylbis(2-methyl-4-(1-naphthyl)-indenyl)titanbispropen-2-olat
Dimethylsilandiylbis(2-methyl-4-phenyl-indenyl)titanbispropen-2-olat
Dimethylsilandiylbis(2-methyl-4-tert.butyl-indenyl)titanbispropen-2-olat
Dimethylsilandiylbis(2-methyl-4-ethyl-indenyl)titanbispropen-2-olat
Dimethylsilandiylbis(2-ethyl-indenyl)titanbispropen-2-olat
Dimethylsilandiylbis(2-ethyl-4-ethyl-indenyl)titanbispropen-2-olat
Dimethylsilandiybis(2-methyl-4,5-benzo-indenyl)titanbispropen-2-olat
Dimethylsilandiylbis(2,4,6-trimethyl-indenyl)titanbispropen-2-olat
Dimethylsilandiylbis(2,4,7-trimethyl-indenyl)titanbispropen-2-olat
Dimethylsilandiylbis(2-methyl-5-isobutyl-indenyl)titanbispropen-2-olat
Dimethylsilandiylbis[2-methyl-4-(4-fluorophenyl)indenyl]titanbispropen-2-olat
Dimethylsilandiylbis[2-methyl-4-(4-methoxyphenyl)indenyl]titanbispropen-2-olat
Dimethylsilandiylbis[2-methyl-4-(4-(trifluoromethyl)phenyl)indenyl]titanbispropen-2-olat
Dimethylsilandiylbis[2-methyl-4-(4-(N,N-dimethylamino)phenyl)indenyl]titanbispropen-2-olat
Dimethylsilandiylbis[2-methyl-4-(4-methylphenyl)indenyl]titanbispropen-2-olat
Dimethylsilandiylbis[2-methyl-2-(4-fluorophenyl)indenyl]titanbispropen-2-olat
Dimethylsilandiylbis[2-methyl-4-(2-methoxyphenyl)indenyl]titanbispropen-2-olat
Dimethylsilandiylbis[2-methyl-4-(2-(trifluoromethyl)phenyl)indenyl]titanbispropen-2-olat
Dimethylsilandiylbis[2-methyl-4-(2-(N,N-dimethylamino)phenyl)indenyl]titanbispropen-2-olat
Dimethylsilandiylbis[2-methyl-4-(2-methylphenyl)indenyl]titanbispropen-2-olat
Dimethylsilandiylbis[2-methyl-4-pyridylindenyl]titanbispropen-2-olat
Dimethylsilandiylbis[2-ethyl-4-(2-methylphenyl)indenyl]titanbispropen-2-olat
Dimethylsilandiylbis[2-ethyl-4-pyridylindenyl]titanbispropen-2-olat
Dimethylsilandiylbis[2-ethyl-4-(4-methylphenyl)indenyl]titanbispropen-2-olat
Dimethylsilandiylbis[2-ethyl-2-(4-fluorophenyl)indenyl]titanbispropen-2-olat
Dimethylsilandiylbis[2-propenyl-4-methylindenyl]titanbispropen-2-olat
Dimethylsilandiylbis[2-propenyl-4-phenylindenyl]titanbispropen-2-olat
Dimethylsilandiylbis[2-phenyl-4-methylindenyl]titanbispropen-2-olat
Dimethylsilandiylbis[2, 4-diphenylindenyl]titanbispropen-2-olat
Dimethylsilandiylbis(4,5-dihydro-8-methyl-7H-cyclopent[e]acenaphthylen-7-yliden)titanbispropen-2-olat
Methyl(phenyl)silandiylbis(indenyl)titanbispropen-2-olat
Methyl(phenyl)silandiylbis(4-naphthyl-indenyl)titanbispropen-2-olat
Methyl(phenyl)silandiylbis(2-methyl-indenyl)titanbispropen-2-olat
Methyl(phenyl)silandiylbis(2-methyl-4-(1-naphthyl)-indenyl)titanbispropen-2-olat
Methyl(phenyl)silandiylbis(2-methyl-4-phenyl-indenyl)titanbispropen-2-olat
Methyl(phenyl)silandiylbis(2-methyl-4-tert.butyl-indenyl)titanbispropen-2-olat
Methyl(phenyl)silandiylbis(2-methyl-4-ethyl-indenyl)titanbispropen-2-olat
Methyl(phenyl)silandiylbis(2-ethyl-indenyl)titanbispropen-2-olat
Methyl(phenyl)silandiylbis(2-ethyl-4-ethyl-indenyl)titanbispropen-2-olat
Dimethylsilandiybis(2-methyl-4,5-benzo-indenyl)titanbispropen-2-olat
Methyl(phenyl)silandiylbis(2,4,6-trimethyl-indenyl)titanbispropen-2-olat
Methyl(phenyl)silandiylbis(2,4,7-trimethyl-indenyl)titanbispropen-2-olat
Methyl(phenyl)silandiylbis(2-methyl-5-isobutyl-indenyl)titanbispropen-2-olat
Methyl(phenyl)silandiylbis[2-methyl-4-(4-fluorophenyl)indenyl]titanbispropen-2-olat
Methyl(phenyl)silandiylbis[2-methyl-4-(4-methoxyphenyl)indenyl]titanbispropen-2-olat
Methyl(phenyl)silandiylbis[2-methyl-4-(4-(trifluoromethyl)phenyl)indenyl]titanbispropen-2-olat
Methyl(phenyl)silandiylbis[2-methyl-4-(4-(N,N-dimethylamino)phenyl)indenyl]titanbispropen-2-olat
Methyl(phenyl)silandiylbis[2-methyl-4-(4-methylphenyl)indenyl]titanhispropen-2-olat
Methyl(phenyl)silandiylbis[2-methyl-2-(4-fluorophenyl)indenyl]titanbispropen-2-olat
Methyl(phenyl)silandiylbis[2-methyl-4-(2-methoxyphenyl)indenyl]titanbispropen-2-olat
Methyl(phenyl)silandiylbis[2-methyl-4-(2-(trifluoromethyl)phenyl)indenyl]titanbispropen-2-olat
Methyl(phenyl)silandiylbis[2-methyl-4-(2-(N,N-dimethylamino)phenyl)indenyl]titanbispropen-2-olat
Methyl(phenyl)silandiylbis[2-methyl-4-(2-methylphenyl)indenyl]titanbispropen-2-olat
Methyl(phenyl)silandiylbis[2-methyl-4-pyridylindenyl]titanbispropen-2-olat
Methyl(phenyl)silandiylbis[2-ethyl-4-(2-methylphenyl)indenyl]titanbispropen-2-olat
Methyl(phenyl)silandiylbis[2-ethyl-4-pyridylindenyl]titanbispropen-2-olat
Methyl(phenyl)silandiylbis[2-ethyl-4-(4-methylphenyl)indenyl]titanbispropen-2-olat
Methyl(phenyl)silandiylbis[2-ethyl-2-(4-fluorophenyl)indenyl]titanbispropen-2-olat
Methyl(phenyl)silandiylbis[2-propenyl-4-methylindenyl]titanbispropen-2-olat
Methyl(phenyl)silandiylbis[2-propenyl-4-phenylindenyl]titanbispropen-2-olat
Methyl(phenyl)silandiylbis[2-phenyl-4-methylindenyl]titanbispropen-2-olat
Methyl(phenyl)silandiylbis[2, 4-diphenylindenyl]titanbispropen-2-olat
Methyl(phenyl)silandiylbis(4,5-dihydro-8-methyl-7H-cyclopent[e]acenaphthylen-7-yliden)titanbispropen-2-olat
Isopropylidenbis(indenyl)titanbispropen-2-olat
Isopropylidenbis(4-naphthyl-indenyl)titanbispropen-2-olat
Isopropylidenbis(2-methyl-indenyl)titanbispropen-2-olat
Isopropylidenbis(2-methyl-4-(1-naphthyl)-indenyl)titanbispropen-2-olat
Isopropylidenbis(2-methyl-4-phenyl-indenyl)titanbispropen-2-olat
Isopropylidenbis(2-methyl-4-tert.butyl-indenyl)titanbispropen-2-olat
Isopropylidenbis(2-methyl-4-ethyl-indenyl)titanbispropen-2-olat
Isopropylidenbis(2-ethyl-indenyl)titanbispropen-2-olat
Isopropylidenbis(2-ethyl-4-ethyl-indenyl)titanbispropen-2-olat
Dimethylsilandiybis(2-methyl-4,5-benzo-indenyl)titanbispropen-2-olat
Isopropylidenbis(2,4,6-trimethyl-indenyl)titanbispropen-2-olat
Isopropylidenbis(2,4,7-trimethyl-indenyl)titanbispropen-2-olat
Isopropylidenbis(2-methyl-5-isobutyl-indenyl)titanbispropen-2-olat
Isopropylidenbis[2-methyl-4-(4-fluorophenyl)indenyl]titanbispropen-2-olat
Isopropylidenbis[2-methyl-4-(4-methoxyphenyl)indenyl]titanbispropen-2-olat
Isopropylidenbis[2-methyl-4-(4-trifluoromethyl)phenyl)indenyl]titanbispropen-2-olat
Isopropylidenbis[2-methyl-4-(4-(N,N-dimethylamino)phenyl)indenyl]titanbispropen-2-olat
Isopropylidenbis[2-methyl-4-(4-methylphenyl)indenyl]titanbispropen-2-olat
Isopropylidenbis[2-methyl-2-(4-fluorophenyl)indenyl]titanbispropen-2-olat
Isopropylidenbis[2-methyl-4-(2-methoxyphenyl)indenyl]titanbispropen-2-olat
Isopropylidenbis[2-methyl-4-(2-(trifluoromethyl)phenyl)indenyl]titanbispropen-2-olat
Isopropylidenbis[2-methyl-4-(2-(N,N-dimethylamino)phenyl)indenyl]titanbispropen-2-olat
Isopropylidenbis[2-methyl-4-(2-methylphenyl)indenyl]titanbispropen-2-olat
Isopropylidenbis[2-methyl-4-pyridylindenyl]titanbispropen-2-olat
Isopropylidenbis[2-ethyl-4-(2-methylphenyl)indenyl]titanbispropen-2-olat
Isopropylidenbis[2-ethyl-4-pyridylindenyl]titanbispropen-2-olat
Isopropylidenbis[2-ethyl-4-(4-methylphenyl)indenyl]titanbispropen-2-olat
Isopropylidenbis[2-ethyl-2-(4-fluorophenyl)indenyl]titanbispropen-2-olat
Isopropylidenbis[2-propenyl-4-methylindenyl]titanbispropen-2-olat
Isopropylidenbis[2-propenyl-4-phenylindenyl]titanbispropen-2-olat
Isopropylidenbis[2-phenyl-4-methylindenyl]titanbispropen-2-olat
Isopropylidenbis[2, 4-diphenylindenyl]titanbispropen-2-olat
Isopropylidenbis(4,5-dihydro-8-methyl-7H-cyclopent[e]acenaphthylen-7-yliden)titanbispropen-2-olat
Methylenbis(indenyl)titanbispropen-2-olat
Methylenbis(4-naphthyl-indenyl)titanbispropen-2-olat
Methylenbis(2-methyl-indenyl)titanbispropen-2-olat
Methylenbis(2-methyl-4-(1-naphthyl)-indenyl)titanbispropen-2-olat
Methylenbis(2-methyl-4-phenyl-indenyl)titanbispropen-2-olat
Methylenbis(2-methyl-4-tert.butyl-indenyl)titanbispropen-2-olat
Methylenbis(2-methyl-4-ethyl-indenyl)titanbispropen-2-olat
Methylenbis(2-ethyl-indenyl)titanbispropen-2-olat
Methylenbis(2-ethyl-4-ethyl-indenyl)titanbispropen-2-olat
Dimethylsilandiybis(2-methyl-4,5-benzo-indenyl)titanbispropen-2-olat
Methylenbis(2,4,6-trimethyl-indenyl)titanbispropen-2-olat
Methylenbis(2,4,7-trimethyl-indenyl)titanbispropen-2-olat
Methylenbis(2-methyl-5-isobutyl-indenyl)titanbispropen-2-olat
Methylenbis[2-methyl-4-(4-fluorophenyl)indenyl]titanbispropen-2-olat
Methylenbis[2-methyl-4-(4-methoxyphenyl)indenyl]titanbispropen-2-olat
Methylenbis[2-methyl-4-(4-(trifluoromethyl)phenyl)indenyl]titanbispropen-2-olat
Methylenbis[2-methyl-4-(4-(N,N-dimethylamino)phenyl)indenyl]titanbispropen-2-olat
Methylenbis[2-methyl-4-(4-methylphenyl)indenyl]titanbispropen-2-olat
Methylenbis[2-methyl-2-(4-fluorophenyl)indenyl]titanbispropen-2-olat
Methylenbis[2-methyl-4-(2-methoxyphenyl)indenyl]titanbispropen-2-olat
Methylenbis[2-methyl-4-(2-(trifluoromethyl)phenyl)indenyl]titanbispropen-2-olat
Methylenbis[2-methyl-4-(2-(N,N-dimethylamino)phenyl)indenyl]titanbispropen-2-olat
Methylenbis[2-methyl-4-(2-methylphenyl)indenyl]titanbispropen-2-olat
Methylenbis[2-methyl-4-pyridylindenyl]titanbispropen-2-olat
Methylenbis[2-ethyl-4-(2-methylphenyl)indenyl]titanbispropen-2-olat
Methylenbis[2-ethyl-4-pyridylindenyl]titanbispropen-2-olat
Methylenbis[2-ethyl-4-(4-methylphenyl)indenyl]titanbispropen-2-olat
Methylenbis[2-ethyl-2-(4-fluorophenyl)indenyl]titanbispropen-2-olat
Methylenbis[2-propenyl-4-methylindenyl]titanbispropen-2-olat
Methylenbis[2-propenyl-4-phenylindenyl]titanbispropen-2-olat
Methylenbis[2-phenyl-4-methylindenyl]titanbispropen-2-olat
Methylenbis[2, 4-diphenylindenyl]titanbispropen-2-olat
Methylenbis(4,5-dihydro-8-methyl-7H-cyclopent[e]acenaphthylen-7-yliden)titanbispropen-2-olat
1,2-Ethandiylbis(2-methyl-4-phenyl-indenyl)zirkoniumbispropen-2-olat
1,4-Butandiylbis(2-methyl-4-phenyl-indenyl)zirkoniumbispropen-2-olat
1,2-Ethandiylbis(2-methyl-4,6 diisopropyl-indenyl)zirkoniumbispropen-2-olat
1,4-Butandiylbis(2-methyl-4-isopropyl-indenyl)zirkoniumbispropen-2-olat
1,4-Butandiylbis(2-methyl-4,5-benzo-indenyl)zirkoniumbispropen-2-olat
1,2-Ethandiylbis(2-methyl-4,5-benzo-indenyl)zirkoniumbispropen-2-olat
1,2-Ethandiylbis(2,4,7-trimethyl-indenyl)zirkoniumbispropen-2-olat
1,2-Ethandiylbis(2-methyl-indenyl)zirkoniumbispropen-2-olat
1,4-Butandiylbis(2-methyl-indenyl)zirkoniumbispropen-2-olat
1,2-Ethandiylbis(2-methyl-4-phenyl-indenyl)titanbispropen-2-olat
1,4-Butandiylbis(2-methyl-4-phenyl-indenyl)titanbispropen-2-olat
1,2-Ethandiylbis(2-methyl-4,6 diisopropyl-indenyl)titanbispropen-2-olat
1,4-Butandiylbis(2-methyl-4-isopropyl-indenyl)titanbispropen-2-olat
1,4-Butandiylbis(2-methyl-4,5-benzo-indenyl)titanbispropen-2-olat
1,2-Ethandiylbis(2-methyl-4,5-benzo-indenyl)titanbispropen-2-olat
1,2-Ethandiyl-1-cyclopentadienyl-2-indenyltitanbispropen-2-olat
1,2-Ethandiyl-1-cyclopentadienyl-2-indenylzirkoniumbispropen-2-olat
1,2-Ethandiylbis(2-methyl-indenyl)titanbispropen-2-olat
1,4-Butandiylbis(2-methyl-indenyl)titanbispropen-2-olat
Bis(fluorenyl)zirkoniumbispropen-2-olat
(Indenyl)(fluorenyl)zirkoniumbispropen-2-olat
(3-Methyl-5-naphthylindenyl)(2,7-di-tert-butylfluorenyl)zirkoniumbispropen-2-olat
(3-Methyl-5-naphthylindenyl)(3,4,7-trimethoxyfluorenyl)zirkoniumbispropen-2-olat
(Pentamethylcyclopentadienyl)(tetrahydroindenyl)zirkoniumbispropen-2-olat
(Cyclopentadienyl)(1-octen-8-ylcyclopentadienyl)zirkoniumbispropen-2-olat
(Indenyl)(1-buten-4-ylcyclopentadienyl)zirkoniumbispropen-2-olat
[1,3-Bis(trimethylsilyl)cyclopentadienyl](3,4-benzofluorenyl)zirkoniumbispropen-2-olat
Dimethylsilandiyl(cyclopentadienyl)(indenyl)zirkoniumbispropen-2-olat
Dimethylsilandiyl(2-methyl-4,5-benzoindenyl)(2-methyl-4-phenylindenyl)zirkoniumbispropen-2-olat
Dimethylsilandiyl(2-methyl-4,5-benzoindenyl)(2-ethyl-4-phenylindenyl)zirkoniumbispropen-2-olat
Dimethylsilandiyl(2-methylindenyl)(4-phenylindenyl)zirkoniumbispropen-2-olat
1-Silacyclopentan-1,1-bis(indenyl)zirkoniumbispropen-2-olat
1-Silacyclopentan-1,1-bis(2-methylindenyl)zirkoniumbispropen-2-olat
1-Silacyclopentan-1,1-bis(2-ethylindenyl)zirkoniumbispropen-2-olat
1-Silacyclopentan-1,1-bis(2-ethyl-4-naphthylindenyl)zirkoniumbispropen-2-olat
Isopropylidencyclopentadienyl(1-indenyl)zirkoniumbispropen-2-olat
Isopropylidencyclopentadienyl(4-phenylindenyl)zirkoniumbispropen-2-olat
Isopropylidencyclopentadienyl(9-fluorenyl)zirkoniumbispropen-2-olat
Isopropylidencyclopentadienyl(2,7-dimethoxy-9-fluorenyl)zirkoniumbispropen-2-olat
Isopropylidencyclopentadienyl(2,7-di-tert-butyl-9-fluorenyl)zirkoniumbispropen-2-olat
Isopropylidencyclopentadienyl(2,7-dibromo-9-fluorenyl)zirkoniumbispropen-2-olat
Isopropylidencyclopentadienyl(2,7-diphenyl-9-fluorenyl)zirkoniumbispropen-2-olat
Isopropylidencyclopentadienyl(2,7-bispropen-2-olat-9-fluorenyl)zirkoniumbispropen-2-olat
Isopropyliden(3-methylcyclopentadienyl)(2,7-dibutyl-9-fluorenyl)zirkoniumbispropen-2-olat
Isopropyliden(3-tert-butylcyclopentadienyl)(2,7-dibutyl-9-fluorenyl)zirkoniumbispropen-2-olat
Isopropyliden(3-trimethylsilylcyclopentadienyl)(3,6-di-tert-butyl-9-fluorenyl)zirkoniumbispropen-2-olat
Isopropylidencyclopentadienyl[2,7-bis(3-butenyl)9-fluorenyl]zirkoniumbispropen-2-olat
Isopropylidencyclopentadienyl(3-tert-butyl-9-fluorenyl)zirkoniumbispropen-2-olat
1,6-Bis[methylsilylbis(2-methyl-4-phenylindenyl)zirkoniumbispropen-2-olat]hexan
1,6-Bis[methylsilylbis(2-methyl-4,5-benzoindenyl)zirkoniumbispropen-2-olat]hexan
1,6-Bis[methylsilylbis(2-ethyl-4-phenylindenyl)zirkoniumbispropen-2-olat]hexan
1,6-Bis[methylsilylbis(indenyl)zirkoniumbispropen-2-olat]hexan
1,6-Bis[methylsilylbis(2-methyl-4,6-diisopropylindenyl)zirkoniumbispropen-2-olat]hexan
1,6-Bis[methylsilyl(2-methylindenyl)(indenyl)zirkoniumbispropen-2-olat]hexan
1,6-Bis[methylsilyl(tetrahydroindenyl)(indenyl)zirkoniumbispropen-2-olat]hexan
1,6-Disila-1,1,6,6-tetramethyl-1,6-bis[methylsilylbis(indenyl)zirkoniumbispropen-2-olat]hexan
1,4-Disila-1,4-bis[cyclopentadienylzirkoniumbispropen-2-olat]cyclohexan
(1-Methyl-3-tert-butylcyclopentadienyl)(1-phenyl-4-methoxy-7-chlorofluorenyl)zirkoniumbispropen-2-olat
(4,7-Dichloroindenyl)(3,6-dimesitylfluorenyl)zirkoniumbispropen-2-olat
Bis(2,7-di-tert-butyl-9-cyclohexylfluorenyl)zirkoniumbispropen-2-olat
(2,7-Dimesitylfluorenyl)[2,7-bis(1-naphthyl)fluorenyl]zirkoniumbispropen-2-olat
Dimethylsilylbis(fluorenyl)zirkoniumbispropen-2-olat
Isopropyliden(2-indenyl)(9-fluorenyl)zirkoniumbispropen-2-olat
[4-(Cyclopentadienyl)-4,7,7-trimethyl(tetrahydroindenyl)]zirkoniumbispropen-2-olat
[4-(Cyclopentadienyl)-4,7-bispropen-2-olat-7-phenyl(5,6-bispropen-2-olattetrahydroindenyl)]zirkoniumbispropen-2-olat
Bis(fluorenyl)titanbispropen-2-olat
(Indenyl)(fluorenyl)titanbispropen-2-olat
(3-Methyl-5-naphthylindenyl)(2,7-di-tert-butylfluorenyl)titanbispropen-2-olat
(3-Methyl-5-naphthylindenyl)(3,4,7-trimethoxyfluorenyl)titanbispropen-2-olat
(Pentamethylcyclopentadienyl)(tetrahydroindenyl)titanbispropen-2-olat
(Cyclopentadienyl)(1-octen-8-ylcyclopentadienyl)titanbispropen-2-olat
(Indenyl)(1-buten-4-ylcyclopentadienyl)titanbispropen-2-olat
[1,3-Bis(trimethylsilyl)cyclopentadienyl](3,4-benzofluorenyl)titanbispropen-2-olat
Dimethylsilandiyl(cyclopentadienyl)(indenyl)titanbispropen-2-olat
Dimethylsilandiyl(2-methyl-4,5-benzoindenyl)(2-methyl-4-phenylindenyl)titanbispropen-2-olat
Dimethylsilandiyl(2-methyl-4,5-benzoindenyl)(2-ethyl-4-phenylindenyl)titanbispropen-2-olat
Dimethylsilandiyl(2-methylindenyl)(4-phenylindenyl)titanbispropen-2-olat
1-Silacyclopentan-1,1-bis(indenyl)titanbispropen-2-olat
1-Silacyclopentan-1,1-bis(2-methylindenyl)titanbispropen-2-olat
1-Silacyclopentan-1,1-bis(2-ethylindenyl)titanbispropen-2-olat
1-Silacyclopentan-1,1-bis(2-ethyl-4-naphthylindenyl)titanbispropen-2-olat
Isopropylidencyclopentadienyl(1-indenyl)titanbispropen-2-olat
Isopropylidencyclopentadienyl(4-phenylindenyl)titanbispropen-2-olat
Isopropylidencyclopentadienyl(9-fluorenyl)titanbispropen-2-olat
Isopropylidencyclopentadienyl(2,7-dimethoxy-9-fluorenyl)titanbispropen-2-olat
Isopropylidencyclopentadienyl(2,7-di-tert-butyl-9-fluorenyl)titanbispropen-2-olat
Isopropylidencyclopentadienyl(2,7-dibromo-9-fluorenyl)titanbispropen-2-olat
Isopropylidencyclopentadienyl(2,7-diphenyl-9-fluorenyl)titanbispropen-2-olat
Isopropylidencyclopentadienyl(2,7-bispropen-2-olat-9-fluorenyl)titanbispropen-2-olat
Isopropyliden(3-methylcyclopentadienyl)(2,7-dibutyl-9-fluorenyl)titanbispropen-2-olat
Isopropyliden(3-tert-butylcyclopentadienyl)(2,7-dibutyl-9-fluorenyl)titanbispropen-2-olat
Isopropyliden(3-trimethylsilylcyclopentadienyl)(3,6-di-tert-butyl-9-fluorenyl)titanbispropen-2-olat
Isopropylidencyclopentadienyl[2,7-bis(3-butenyl)-9-fluorenyl]titanbispropen-2-olat
Isopropylidencyclopentadienyl(3-tert-butyl-9-fluorenyl)titanbispropen-2-olat
1,6-Bis[methylsilylbis(2-methyl-4-phenylindenyl)titanbispropen-2-olat]hexan
1,6-Bis[methylsilylbis(2-methyl-4,5-benzoindenyl)titanbispropen-2-olat]hexan
1,6-Bis[methylsilylbis(2-ethyl-4-phenylindenyl)titanbispropen-2-olat]hexan
1,6-Bis[methylsilylbis(indenyl)titanbispropen-2-olat]hexan
1,6-Bis[methylsilylbis(2-methyl-4,6-diisopropylindenyl)titanbispropen-2-olat]hexan
1,6-Bis[methylsilyl(2-methylindenyl)(indenyl)titanbispropen-2-olat]hexan
1,6-Bis[methylsilyl(tetrahydroindenyl)(indenyl)titanbispropen-2-olat]hexan
1,6-Disila-1,1,6,6-tetramethyl-1,6-bis[methylsilylbis(indenyl)titanbispropen-2-olat]hexan
1,4-Disila-1,4-bis[cyclopentadienyltitanbispropen-2-olat]cyclohexan
(1-Methyl-3-tert-butylcyclopentadienyl)(1-phenyl-4-methoxy-7-chlorofluorenyl)titanbispropen-2-olat
(4,7-Dichloroindenyl)(3,6-dimesitylfluorenyl)titanbispropen-2-olat
Bis(2,7-di-tert-butyl-9-cyclohexylfluorenyl)titanbispropen-2-olat
(2,7-Dimesitylfluorenyl)[2,7-bis(1-naphthyl)fluorenyl]titanbispropen-2-olat
Dimethylsilylbis(fluorenyl)titanbispropen-2-olat
Isopropyliden(2-indenyl)(9-fluorenyl)titanbispropen-2-olat
[4-(Cyclopentadienyl)-4,7,7-trimethyl(tetrahydroindenyl)]titanbispropen-2-olat
[4-(Cyclopentadienyl)-4,7-bispropen-2-olat-7-phenyl(5,6-bispropen-2-olattetrahydroindenyl)]titanbispropen-2-olat
Dimethylsilandiyl(cyclopentadienyl)(indenyl)zirkoniumbispropen-2-olat
Dimethylsilandiyl(trifluoromethylcyclopentadienyl)(cyclopentadienyl)zirkoniumbispro pen-2-olat
Dimethylsilandiyl(phenylcyclopentadienyl)(cyclopentadienyl)zirkoniumbispropen-2-olat
Dimethylsilandiyl(4-fluorophenylcyclopentadienyl)(indenyl)zirkoniumbispropen-2-olat
Methyl(phenyl)silandiyl(cyclopentadienyl)(indenyl)zirkoniumbispropen-2-olat
Methyl(phenyl)silandiyl(trifluoromethylcyclopentadienyl)(cyclopentadienyl)zirkonium bispropen-2-olat
Methyl(phenyl)silandiyl(phenylcyclopentadienyl)(cyclopentadienyl)zirkoniumbisprop en-2-olat
Methyl(phenyl)silandiyl(4-fluorophenylcyclopentadienyl)(indenyl)zirkoniumbispropen-2-olat
Methylensilandiyl(cyclopentadienyl)(indenyl)zirkoniumbispropen-2-olat
Methylensilandiyl(trifluoromethylcyclopentadienyl)(cyclopentadienyl)zirkoniumbispro pen-2-olat
Methylensilandiyl(phenylcyclopentadienyl)(cyclopentadienyl)zirkoniumbispropen-2-olat
Methylensilandiyl(4-fluorophenylcyclopentadienyl)(indenyl)zirkoniumbispropen-2-olat
(Cyclopentadienyl)(indenyl)zirkoniumbispropen-2-olat
(Trifluoromethylcyclopentadienyl)(cyclopentadienyl)zirkoniumbispropen-2-olat
(Phenylcyclopentadienyl)(cyclopentadienyl)zirkoniumbispropen-2-olat
(4-Fluorophenylcyclopentadienyl)(indenyl)zirkoniumbispropen-2-olat
(Cyclopentadienyl)(indenyl)titanbispropen-2-olat
(Trifluoromethylcyclopentadienyl)(cyclopentadienyl)titanbispropen-2-olat
(Phenylcyclopentadienyl)(cyclopentadienyl)titanbispropen-2-olat
(4-Fluorophenylcyclopentadienyl)(indenyl)titanbispropen-2-olat

Wie die oben genannten 1-Propen-2-olate sind auch die 1-Propen-1-olate, 1-Buten-1-olate, 1-Buten-3-methyl-1-olate, 1-Penten2-olate, 2-Buten-2-olate, 1-Phenyl-1-propen-2-olate, 1-Methoxy-2-methyl-1-buten-1-olate, 1-Ethoxy-2-methyl-1-buten-1-olate, 3-Pentadien-1-olate, 1-Ethoxy-2-methyl-1-propen-1-olate, 1-Methoxy-2-methyl-1-propen-1-olate, 1-Butoxy-2-methyl-1-propen-1-olate, 1-Ethoxy-2-methyl-1-propen-1-olate, 1-Methoxy-ethen-1-olate und 1-Trimethylsilyloxy-2-methyl-1-propen-olate oder 1-N,N-Dimethylamino-1-propen-1-olate bevorzugt.

Die Katalysatorkomponente (A) kann durch Umsetzung eines Metallhalogenids mit einem Alkalimetallenolat wie Lithiumenolat hergestellt werden und soll durch das nachfolgende Reaktionsschema beispielhaft anhand der Herstellung von Verbindungen der Formel II aus Metallhalogeniden der Formel III veranschaulicht werden.

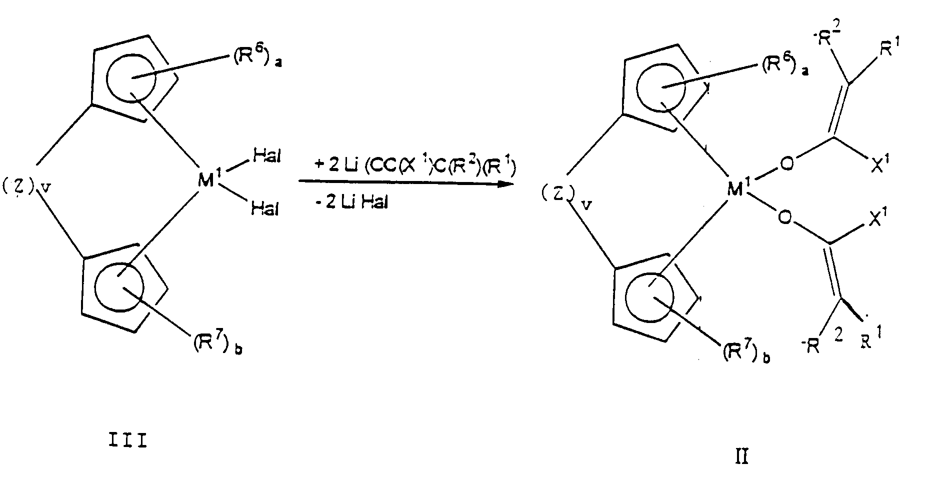

In diesem Schema haben Z, M¹, R¹, R², R⁶, R⁷, X¹, v, a und b die gleiche Bedeutung wie oben in Formel II angegeben. Hal ist ein Halogen wie Fluor oder Chlor. Die im obigen Reaktionsschema angegebenen Dihalogenide wie Verbindung III sind in der Literatur vielfach beschrieben (J. Okuda, Topics in Current Chemistry, Vol. 160; Springer Verlag, Berlin Heidelberg 1991, Seite 97).
Umsetzungen von Verbindungen III in inerten Lösungsmitteln mit dem Lithiumaddukt des gewünschten Enolats führt unter Salzabspaltung zur Bildung von Verbindungen der Formel II. Die Umsetzung erfolgt bei Temperaturen von -50°C bis +150°C, bevorzugt bei 0°C bis 100°C in organischen Lösemitteln, wie z.B. Toluol, Benzol, Methylenchlorid, Tetrachlorkohlenstoff, Tetrahydrofuran, Diethylether und Benzin. Die Umsetzung dauert von 1 min bis zu 24 h, bevorzugt von 5 min bis 5 h. Die erfindungsgemäße Katalysatorkomponente der Formel II kann isoliert oder direkt für weitere Umsetzungen eingesetzt werden. Die Katalysatorkomponente der Formel II kann auch ohne Isolierung von Zwischen- und Endstufen in einer Eintopfreaktion aus Übergangsmetallhalogeniden und dem Lithiumaddukt des Enolats dargestellt werden.

Der erfindungsgemäße Katalysator enthält neben der Katalysatorkomponente (A) außerdem mindestens eine weitere chemische Verbindung (B) als Cokatalysator.

Als Cokatalysator werden bevorzugt metallorganische Verbindungen oder Halogenide der Elemente der II., III., IV., VIII. Nebengruppen oder der Elemente der III. Hauptgruppe des Periodensystems der Elemente verwendet.
Besonders bevorzugt wird als Cokatalysator mindestens eine bor- oder aluminiumorganische Verbindung eingesetzt, die C₁-C₂₀-kohlenstoffhaltige Gruppen enthält, wie verzweigte oder unverzweigte Alkyl- oder Halogenalkylgruppen, z.B. Methyl, Propyl, Isopropyl, Isobutyl, Trifluormethyl, ungesättigte Gruppen, wie Aryl oder Halogenaryl, z.B. Phenyl, Tolyl, Benzylgruppen, Perfluorophenyl, 3,5-Difluorophenyl, Pentachlorophenyl, Pentafluorophenyl, 3,4,5 Trifluorophenyl oder 3,5-Di(trifluoromethyl)phenyl oder ein Bor- oder Aluminiumhalogenid, wie BF₃ oder AlCl₃. Von Bedeutung sind auch mehrkernige bororganische Verbindungen, die mindestens zwei bor- oder aluminiumorganische Strukturäquivalente beinhalten. Es können auch Gemische verschiedener Cokatalysatoren eingesetzt werden. Insbesondere bevorzugt sind bororganische Verbindungen.

Bevorzugt besitzt die Cokatalysatorkomponente (B) die Eigenschaften einer Lewis-Säure. Beispiele für Lewis-Säuren sind Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran, BBr₃, BF₃, FeBr₃, FeCl₃, BCl₃, ZnCl₂, Zn(C₂H₅)₂, B₂H₆, TiCl₄, TiCl₃, VOCl₃, VCl₄, SnCl₄, SnCl₂, N(C₂H₅)₃, Al(C_{2H5})₃, Al(CH₂CH(CH₃)₂)₃, Al(C₃H₇)₃, Al(CH₂)₃CH₃)₃, Al((CH₂)₅CH₃)₃, Al(C₆F₅)₃, Al(C₂H₅)₂Cl, Al₂(C₂H₅)₃Cl₂, AlCl₃ oder Aluminoxane wie Methylaluminoxan, Isobutylaluminoxan, Butylaluminoxan, Heptylaluminoxan und Methylbutylaluminoxan.

Die Cokatalysatorkomponente (B) des erfindungsgemäßen Katalysators kann sowohl mit der Katalysatorkomponente (A) als auch mit dem funktionalisierten Olefin in Wechselwirkung treten.

Optional enthält der erfindungsgemäße Katalysator außer den Komponenten (A) und (B) eine Trägerkomponente (C).
Die Trägerkomponente ist bevorzugt ein poröser anorganischer oder organischer Feststoff. Bevorzugt enthält das Trägermaterial mindestens ein anorganisches Oxid, wie SiO₂, Al₂O₃, MgO, ZrO₂, TiO₂, B₂O₃, CaO, ZnO, ThO₂, Carbonate wie z.B. Na₂CO₃, K₂CO₃, CaCO₃, MgCO₃, Sulfate, wie Na₂SO₄, Al₂(SO₄)₃, BaSO₄, Nitrate wie z.B. KNO₃, Mg(NO₃)₂, Al(NO₃)₃ sowie Oxide wie Na₂O, K₂O, Li₂O insbesondere Siliziumoxid und/oder Aluminiumoxid oder es enthält bevorzugt mindestens ein Polymer, Copolymer, vernetztes Polymer oder Polymerblends, wie z. B. Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.
Das Trägermaterial kann eine spezifische Oberfläche im Bereich von 10 bis 1000 m²/g, bevorzugt von 150 bis 500 m²/g aufweisen. Die mittlere Partikelgröße des Trägers kann 1 bis 500 µm, bevorzugt 5 bis 350 µm, besonders bevorzugt 10 bis 200 µm betragen. Das Porenvolumen des Trägers kann 0,5 bis 4,0 ml/g, bevorzugt 1,0 bis 3,5 ml/g betragen. Eine poröse Struktur des Trägers bewirkt einen Anteil an Hohlräumen (Porenvolumen) im Trägerpartikel. Die Form der Poren kann unregelmäßig, häufig sphärisch ausgebildet sein. Die Poren können durch kleine Porenöffnungen miteinander verbunden sein. Der Porendurchmesser kann etwa 2 bis 100 nm betragen. Die Partikelform des porösen Trägers ist abhängig von der Nachbehandlung und kann irregulär oder sphärisch sein. Die Träger-Teilchengrößen können z. B. durch kryogene Mahlung und/oder Siebung beliebig eingestellt werden.
Erfindungsgemäß ist auch vorgesehen, daß das Trägermaterial vorbehandelt werden kann z.B. durch Erhitzen bei Temperaturen von 50°C bis 1000°C im Inertgasstrom oder im Vakuum bei 0.01 bar bis 0.001 bar oder durch Umsetzung mit einer chemischen Verbindung, die mit Katalysatorgiften reagiert wie z.B. Aluminium-, Magnesium-, Bor- oder Lithiumalkylen oder durch Mischung mit einer chemischen Verbindung, die die Oberfläche des Träger funktionalisiert. Dabei ist es unerheblich, ob das Trägermaterial bereits funktionelle Gruppen trägt oder diese erst nach der Vorbehandlung durch entsprechende Reaktionen auf der Oberfläche eingestellt werden.
Beispielsweise können Trägermaterialien aus SiO₂ in folgender Weise funktionalisiert werden. Eine Suspension des SiO₂ (vorbehandelt: 4h; 200°C, 0.01 bar) in einem geeigneten Lösungsmittel, wie Pentan, Hexan, Heptan, Toluol oder Dichlormethan wird mit einer eine funktionelle Gruppe enthaltende Silylchloridverbindung umgesetzt, mehrere Stunden bei Siedetemperatur erhitzt und dann mit einem geeigneten Lösungsmittel gewaschen. Die Reaktionstemperatur beträgt bevorzugt >50°C, insbesondere 50°C bis 150°C. Die Reaktionszeit betragt 1 bis 600 Minuten, bevorzugt 1 bis 2 Stunden. Vorzugsweise wird die Silylchloridverbindung im äquimolaren Verhältnis bezogen auf den Anteil an Hydroxylgruppen auf der Oberfläche des SiO₂ eingesetzt.
Die Reaktion wird unter Inertbedingungen durchgeführt. Anschließend wird das Umsetzungsprodukt mit einem Lösungsmittel gewaschen. Für den Waschvorgang geeignete Lösungsmittel sind z.B. Pentan, Hexan, Heptan, Toluol oder Dichlormethan gegebenenfalls mit Aminen versetzt, um entstandenes HCl abzufangen. Danach werden im Vakuum bei 20 bis 200°C und 0.01 bis 0.001 bar Lösungsmittelreste entfernt.

Falls der Katalysator geträgert ist, kann er hergestellt werden, indem man die einzelnen Komponenten in beliebiger Reihenfolge mischt. Bevorzugt mischt man beispielsweise die Katalysatorkomponente (A) mit der Cokatalysatorkomponente (B) und danach mit der Trägerkomponente (C) oder die Katalysatorkomponente (A) mit der Trägerkomponente (C) und danach mit der Cokatalysatorkomponente (B) oder die Trägerkomponente (C) wird mit der Cokatalysatorkomponente (B) und danach mit der Katalysatorkomponente (A) umgesetzt. Die Mischung erfolgt in einem geeigneten Lösungsmittel wie Pentan, Heptan, Toluol, Dichlormethan oder Dichlorbenzol. Die Herstellung des erfindungsgemäßen Katalysators wird bei -80 bis 200°C, bevorzugt bei -20 bis 100°C und einer Kontaktzeit zwischen 15 Minuten und 25 Stunden, bevorzugt zwischen 15 Minuten und 5 Stunden durchgeführt.

Die vorliegende Erfindung betrifft auch ein Verfahren zur Herstellung eines funtionalisierten Polymers durch Polymerisation eines oder mehrerer ungesättigter Monomere in Gegenwart des erfindungsgemäßen Katalystors. Die Polymerisation kann eine Homopolymerisation oder eine Copolymerisation von zwei oder mehr verschiedenen Monomeren sein, von denen mindestens eines eine funktionelle Gruppe trägt.
Bevorzugt werden funktionalisierte Monomere der Formel R^{α}-CH=CH-R^{β} polymerisiert, worin R^{α} und R^{β} gleich oder verschieden sind und ein Wasserstoffatom, ein Halogenatom, oder eine C₁-C₂₀-kohlenstoffhaltige Gruppe ist, die mindestens ein Heteroatom enthält, z.B. eine Alkoxy-, Hydroxy-, Alkylhydroxy-, Aldehyd-, Keto-, Nitril-, Carbonsäure-, Carbonsäurealkylester-oder Carbonsäurealkenylestergruppe, oder R^{α} und R^{β} bilden zusammen mit den sie verbindenen Atomen einen oder mehrere Ringe, wobei in der Formel R^{α}-CH=CH-R^{β} zumindest einer der beiden Reste R^{α} und R^{β} von einem Wasserstoffatom verschieden ist. Beispiele für solche Monomere sind funktionalisierte Olefine wie Vinylalkohol, Vinylacetat, α,β-ungesättigte Carbonylverbindungen wie α,β-ungesättigte Ester oder Ketone, Carboxamide, Vinylketone oder Acrylate wie Methylmethacrylat, Butylmethacrylat, Allylmethacrylat oder Nitrile.
Bevorzugt werden in dem erfindinngsgemäßen Verfahren funktionalisierte Monomere wie Vinylalkohol, Methacrylat oder Vinylketone wie Methylvinylketon, Ethylvinylketon, Octylvinylketon oder Phenylvinylketon polymerisiert.

Bevorzugt werden in dem erfindungsgemäßen Verfahren auch Copolymerisationen von mindestens einem funktionalisierten Monomeren mit mindestens einem C₁-C₂₀-Olefin durchgeführt. Beispiele für solche C₁-C₂₀-Olefine sind z.B. C₁-C₂₀-α-Olefine wie Ethylen, Propylen, 1-Buten, 1-Hexen, 4-Methyl-1-penten oder 1-Octen, Styrol, cyclische Olefine wie Norbornen, Vinylnorbornen, Tetracyclododecen, Ethylidennorbornen oder C₄-C₂₀-Diene wie 1,3-Butadien, 1,4-Hexadien, Biscyclopentadien. Die Copolymerisation kann statistisch oder blockweise erfolgen.

Die Polymerisation wird bevorzugt bei einer Temperatur von -60 bis 300°C, besonders bevorzugt 30 bis 250°C, durchgeführt. Der Druck beträgt bevorzugt 0,5 bis 2500 bar, besonders bevorzugt 0,5 bis 1500 bar. Die Polymerisation kann kontinuierlich oder diskontinuierlich, ein- oder mehrstufig, in Lösung, in Suspension, in der Gasphase oder in einem überkritischen Medium durchgeführt werden. Mit Hilfe des erfindungsgemäßen Katalysators kann eine Vorpolymerisation erfolgen. Zur Vorpolymerisation wird bevorzugt das (oder eines der) in der Polymerisation eingesetzte(n) Monomer(e) verwendet.

Zur Entfernung von im Monomer vorhandenen Katalysatorgiften kann eine Reinigung mittels einer chemischen Verbindung oder mittels eines physikalischen Prozeßes vorgesehen werden. Im Falle von α-Olefinen können chemische Verbindungen wie beispielsweise Aluminiumalkyle, z.B. Trimethylaluminium, Triisobutylaluminium, Tributylaluminium eingesetzt werden. Die Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt. Katalysatorgifte können aber auch durch Ausfrieren, Kristallisation, Destillation oder Sublimation vom Monomer getrennt werden.

Dem Reaktionsgemisch kann auch ein Radikalinhibitor wie 4-Methoxyphenol zugesetzt werden.

Wenn die Polymerisation als Suspensions- oder Lösungspolymerisation durchgeführt wird, wird ein gebräuchliches inertes Lösemittel verwendet. Beispielsweise arbeitet man in einem aliphatischen oder cycloaliphatischen oder aromatischen Kohlenwasserstoff; als solcher sei beispielsweise Propan, Butan, Hexan, Heptan, Isooctan, Cyclohexan, Methylcyclohexan, Toluol, etherische Lösemittel, wie beispielsweise Tetrahydrofuran oder Diethylether oder halogenierte Kohlenwasserstoffe, wie Methylenchlorid oder halogenierte aromatische Kohlenwasserstoffe, wie beispielsweise o-Dichlorbenzol genannt. Weiterhin kann eine Benzin- bzw. hydrierte Dieselölfraktion benutzt werden. Bevorzugt wird im flüssigen, gasförmigen oder überkritischen Monomeren polymerisiert.

Werden inerte Lösemittel verwendet, werden die Monomere gasförmig oder flüssig zudosiert.

Ist der erfindungsgemäße Katalysator geträgert, kann er als Pulver oder noch Lösemittel behaftet wieder resuspendiert und als Suspension in einem inerten Suspensionsmittel in das Polymerisationssystem eingeschleust werden.

Die Dauer der Polymerisation ist beliebig, da das erfindungsgemäß zu verwendende Katalysatorsystem einen nur geringen zeitabhängigen Abfall der Polymerisationsaktivität zeigt.

Die mit dem erfindungsgemäßen Katalysator hergestellten Polymere eignen sich zur Herstellung von Werkstoffen durch bekannte Verfahren. Aufgrund der funktionellen Gruppen auf der Oberfläche der Polymere ergeben sich vorteilhafte Wechselwirkungen mit einer Vielzahl von polaren Verbindungen und Materialien, wie z.B. gute Hafteigenschaften.

### Beispiele

Allgemeine Angaben: Die Herstellung und Handhabung der organometallischen Verbindungen erfolgte unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Die Verbindungen wurden mit ¹H-NMR, ¹³C-NMR und IR-Spektroskopie charakterisiert.

### Beispiel 1

### Biscyclopentadienyltitanbispropen-2-olat

In ein 200 ml Schlenkgefäß werden 400 mg (6.25 mmol) Lithiumpropen-2-olat und 750 mg (3.02 mmol) Biscyclopentadienyltitandichlorid eingewogen und bei 0°C mit 70 ml Tetahydrofuran versetzt. Man läßt 30 min bei dieser Temperatur und weitere 24 Stunden bei Raumtemperatur rühren, wobei die rote Lösung ihre Farbe nach Orange verändert. Anschließend wird das Lösungsmittel im Vakuum entfernt, der Rückstand in Dichlormethan aufgenommen und über eine Glassinterfritte das unlösliche Lithiumchlorid abgetrennt. Das rote Filtrat wird auf 1/3 des Volumens eingeengt und in den Tiefkühlschrank gebracht, wobei -20°C rotorange Kristalle anfallen. Nach Entfernen von Lösungsmittelresten im Vakuum isoliert man 680 mg (77 %) des orangeroten Feststoffes. Smp: 72.8°C (DSC), Zers.: 203.6°C (DSC).

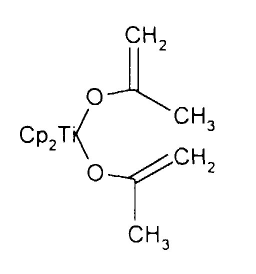

### Beispiel 2

### Biscyclopentadienylzirkoniumbispropen-2-olat

In ein 200 ml Schlenkgefäß werden 1.00 g (15.6 mmol) Lithiumpropen-2-olat und 2.17 g (7.42 mmol) Biscyclopentadienylzirkoniumdichlorid eingewogen und bei 0°C mit 80 ml Tetrahydrofuran versetzt. Man läßt 30 min bei dieser Temperatur und weitere 1.5 Stunden bei Raumtemperatur rühren. Anschließend wird das Lösungsmittel im Vakuum abgezogen, der Rückstand in Pentan aufgenommen und über eine Glasfritte das unlösliche Lithiumchlorid abgetrennt. Nach Entfernen des Lösungsmittels im Vakuum isoliert man 2.18 g (88 %) des weißen Feststoffes. Zers.: > 75°C (DSC).

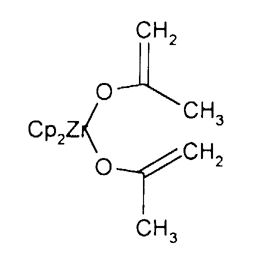

### Beispiel 3

### Biscyclopentadienylhafniumbispropen-2-olat

In ein 200 ml Schlenkgefäß werden 425 mg (6.64 mmol) Lithiumpropen-2-olat und 1.26 g (3.32 mmol) Biscyclopentadienylhafniumdichlorid eingewogen und bei 0°C mit 50 ml Tetrahydrofuran versetzt. Man läßt 30 min bei dieser Temperatur und weitere 4 Stunden bei Raumtemperatur rühren Anschließend wird das Lösungsmittel im Vakuum entfernt, der Rückstand in Dichlormethan aufgenommen und über eine Glasfritte das unlösliche Lithiumchlorid abgetrennt. Nach Entfernen des Lösungsmittels im Vakuum isoliert man 1.02 g (2.69 mmol, 86 %) des leicht gelblichen Feststoffes, Smp. 82.8°C, Zers 230°C (DSC).

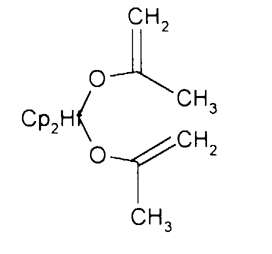

### Beispiel 4

### Biscyclopentadienylzirkoniumbispropen-2-olat mit Tris(pentafluorophenyl)boran

Unter Schutzgasatmosphäre werden in einem Präparateglas bei Raumtemperatur 40 mg (0.12 mmol) Biscyclopentadienylzirkoniumbispropen-2-olat und 122 mg (0.24 mmol) Tris(pentafluorophenyl)boran eingewogen und mit 3 ml Methylenchlorid versetzt. Die Reaktionsmischung färbt sich schlagartig gelb. Anschließend wird das Präparateglas in den Tiefkühlschrank gebracht, wo bei -40°C weiße Kristalle ausfallen. Diese werden in einer Inertgasatmosphäre durch Verdunsten von Lösungsmittel getrocknet. Man erhält 80 mg (0.06 mmol, 50 %) des weißen Feststoffes. Smp.: 114.9°C, Zers(1).: 124°C, Zers(2).: 148.5°C (DSC).

### Beispiel 5

### Umsetzung von Biscyclopentadienylzirkoniumbispropen-2-olat mit Tris(pentafluorophenyl)boran und Methylvinylketon

In ein 50 ml Schlenkgefäß werden bei Raumtemperatur 30 mg (0 09 mmol) Biscyclopentadienyl(zirkoniumbispropen-2-olat) und 92 mg (0.18 mmol) Tris(pentafluorophenyl)boran eingewogen und mit 10 ml Methylenchlorid versetzt. die Lösung färbt sich schlagartig gelb. Anschließend werden 5 ml absoluter Methylvinylketon zu dem Reaktionsgemisch hinzugegeben, wobei eine exotherme Reaktion zu beobachten ist. Man läßt bei Raumtemperatur drei Stunden rühren und entfernt dann im Vakuum alle flüchtigen Bestandteile. Man isoliert 700 mg eines bernsteinfarbenen Polymers. Das Polymer wird ¹H- und ¹³-C-NMR-spektroskopisch vermessen.
¹³C-NMR (150.3 MHz, CDCl₃): δ = 290.0 - 30.00 (m, C-4), 32.0 - 34.0 (m, C-1), 48.2 (bs-C3), 209.0 - 211.0 (m, C-2) ppm.

## Patentansprüche

1. Katalysator, enthaltend (A) mindestens ein Bis(enolat) eines Metalls, wobei jede der beiden Enolat-Gruppen über genau eine Einfachbindung an das Metall gebunden ist, und (B) mindestens eine chemische Verbindung als Cokatalysator.

2. Katalysator gemäß Anspruch 1, worin die Katalysatorkomponente (A) dieFormel (I) aufweist 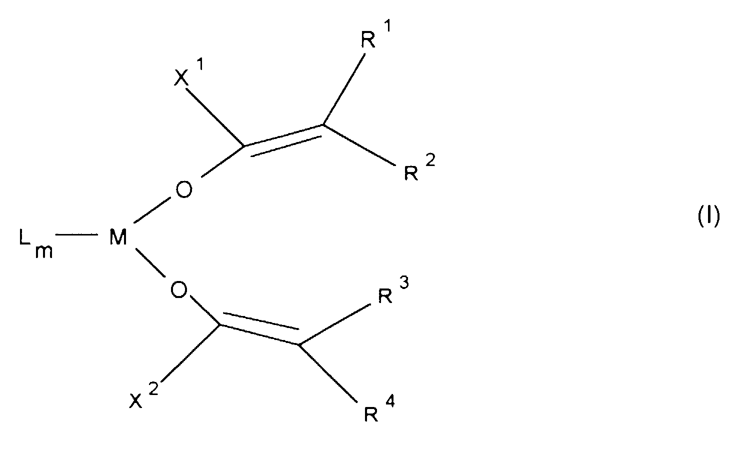 worin,
L ein Ligand ist,
m eine ganze Zahl von 1 bis 6 ist,
M ein Element der III., IV. oder V. Hauptgruppe oder ein Element der I. bis VIII. Nebengruppe des Periodensystems der Elemente ist,
R¹, R², R³, R⁴ unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁-C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C2-C20-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl oder eine oder mehrere Reste R¹, R², R³ und R⁴ können mit L so verbunden sein, daß die Reste R¹,R², R³ und R⁴ und L sowie die sie verbindenden Atome ein C₃-C₂₄-Ringsystem bilden, welches seinerseits mit C₁-C₂₀-kohlenstoffhaltigen Resten substituiert sein kann, oder zwei oder mehrere Reste R¹, R², R³ und R⁴ können so miteinander verbunden sein, daß die Reste R¹ und R², R³ und R⁴, R¹ und R³, R¹ und R⁴, R² und R³ oder R² und R⁴ und die sie verbindenden Atome ein C₃-C₂₄-Ringsystem bilden, welches seinerseits mit C₁-C₂₀-kohlenstoffhaltigen Resten substituiert sein kann,
X¹, X² unabhängig voneinander gleich oder verschieden ein Wasserstoffatom, eine SiR⁵₃-Gruppe, worin R⁵ gleich oder verschieden ein Wasserstoffatom oder eine C₁-C₄₀-kohlenstoffhaltige Gruppe wie C₁-C₂₀-Alkyl, C₁-C₁₀-Halogenalkyl, C₁-C₁₀-Alkoxy, C₆-C₂₀-Aryl, C₆-C₁₀-Halogenaryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₄₀ - kohlenstoffhaltige Gruppe wie C₁-C₄₀-Alkyl, z. B. Methyl, Ethyl, tert.-Butyl, Cyclohexyl oder Octyl, C₂-C₄₀-Alkenyl, C₃-C₄₀-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, halogenhaltiges C₁-C₂₅-Alkyl, halogenhaltiges C₆-C₂₄-Aryl, halogenhaltiges C₇-C₃₀-Arylalkyl, halogenhaltiges C₇-C₃₀-Alkylaryl, C₁-C₁₂-Alkoxyalkyl, C₅-C₂₀-Aryloxyalkyl, C2-C20-Alkenyloxyalkyl, C₁-C₂₀-Alkylamin, C₅-C₂₀-Arylamin, C₂-C₂₀-Alkenylamin, C₁-C₂₀-Alkylphosphin, C₅-C₂₀-Arylphosphin, C₁-C₂₀-Alkylsulfid, C₅-C₂₀-Arylsulfid, C₂-C₂₀-Alkenylsulfid, C₁-C₂₀-Oxoalkyl, C₅-C₂₀-Oxoaryl, C₁-C₂₀-Carboxyalkyl, C₅-C₂₀-Carboxyaryl, oder X¹ und/oder X² können mit L so verbunden sein, daß die Reste X¹ und/oder X² mit L sowie die sie verbindenden Atome ein C₃-C₂₄-Ringsystem bilden, welches seinerseits mit C₁-C₂₀-kohlenstoffhaltigen Reste substituiert sein kann, oder zwei oder mehrere Reste R¹ und X¹, sowie R⁴ und X², können so miteinander verbunden sein, daß die Reste R¹ und X¹ sowie X² und R⁴ und die sie verbindenden Atome ein C₇-C₂₄-Ringsystem bilden, welches seinerseits mit C₁-C₂₀-kohlenstoffhaltigen Resten substituiert sein kann.

3. Katalysator gemäß Anspruch 1 oder 2, worin die Katalysatorkomponente (A) die Formel II aufweist 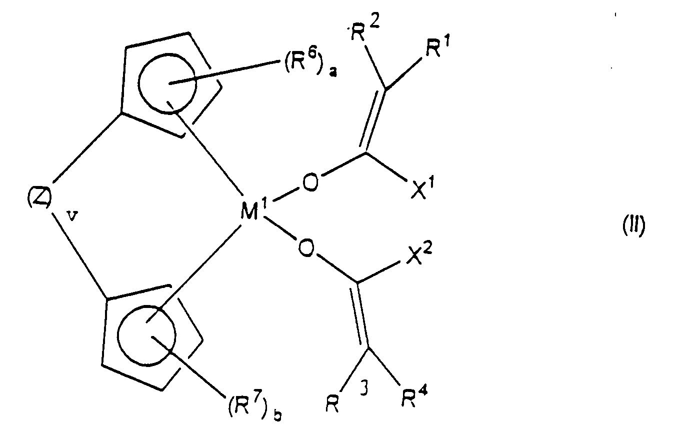 , worin
M¹ ein Metall der III., IV., V. oder VI. Nebengruppe des Periodensystems der Elemente ist, insbesondere Titan, Zirkonium oder Hafnium,
R⁶ gleich oder verschieden sind und ein Wasserstoffatom, eine SiR⁸₃-Gruppe,worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy, oder zwei oder mehrere Reste R⁶ können so miteinander verbunden sein, daß die Reste R⁶ und die sie verbindenden Atome des Cyclopentadienylringes ein C₄-C₂₄-Ringsystem bilden, welches seinerseits mit C₁-C₂₀-kohlenstoffhaltigen Resten substituiert sein kann,
R⁷ gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits mit C₁-C₂₀-kohlenstoffhaltigen Resten substituiert sein kann,
R¹, R², R³, R⁴ sind Reste in für Formel I beschrieben,
X¹, X² sind Reste in für Formel I beschrieben,
a gleich 5 für v = 0, und a gleich 4 für v = 1 ist,
b gleich 5 für v = 0, und b gleich 4 für v = 1 ist,
Z ein verbrückendes Strukturelement zwischen den beiden Cyclopentadienylringen bezeichnet, und v ist 0 oder 1.

4. Katalysator erhältlich durch Kombinieren (A) mindestens eines Bis(enolats) eines Metalls, wobei jede der beiden Enolat-Gruppen über genau eine Einfachbindung an das Metall gebunden ist und (B) mindestens einer chemischen Verbindung als Cokatalysator

5. Katalysator gemäß einem oder mehreren der Ansprüche 1, 2, 3 oder 4, zusätzlich enthaltend einen Träger.

6. Verfahren zur Herstellung einer Katalysatorkomponente (A) wie in Anspruch 1, 2 oder 3 definiert, worin ein Metallhalogenid mit einem Alkalienolat umgesetzt wird.

7. Verwendung eines Katalysators gemäß einem oder mehreren der Ansprüche 1 bis 5 zur Herstellung eines funktionalisierten Polymers.

8. Verfahren zur Herstellung eines funktionalisierten Polymers in Gegenwart eines Katalysators gemäß einem oder mehreren der Ansprüche 1 bis 5.

9. Funktionalisiertes Polymer, erhältlich nach dem Verfahren gemäß Anspruch 8.

10. Bis-(enolat) der Formel IV 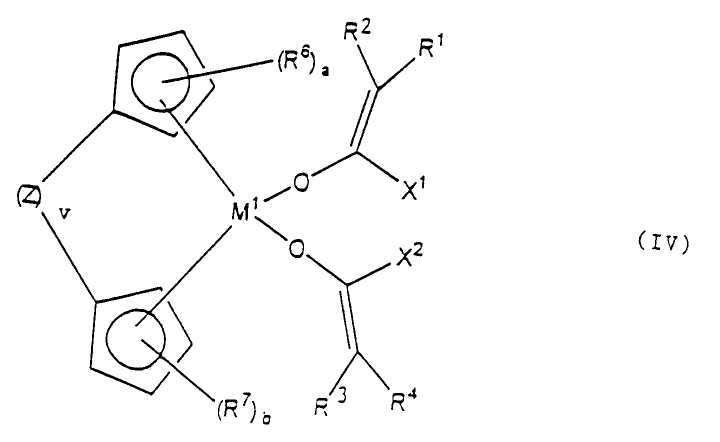 , worin
M¹ ein Metall der III., IV., V. oder VI. Nebengruppe des Periodensystems der Elemente ist, insbesondere Titan, Zirkonium oder Hafnium,
R⁶ gleich oder verschieden sind und ein Wasserstoffatom, eine SiR⁸₃-Gruppe,worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy, oder zwei oder mehrere Reste R⁶ können so miteinander verbunden sein, daß die Reste R⁶ und die sie verbindenden Atome des Cyclopentadienylringes ein C₄-C₂₄-Ringsystem bilden, welches seinerseits mit C₁-C₂₀-kohlenstoffhaltigen Resten substituiert sein kann,
R⁷ gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy, oder zwei oder mehrere Reste R⁷ können so miteinander verbunden sein, daß die Reste R⁷ und die sie verbindenden Atome des Cyclopentadienylringes ein C4-C24-Ringsystem bilden, welches seinerseits mit C₁-C₂₀-kohlenstoffhaltigen Resten substituiert sein kann,
R¹, R², R³, R⁴ sind Reste wie in Formel I beschrieben,
X¹, X² sind Reste wie in Formel I beschrieben,
a gleich 5 für v = 0, und a gleich 4 für v = 1 ist,
b gleich 5 für v = 0, und b gleich 4 für v = 1 ist,
Z ein verbrückendes Strukturelement zwischen den beiden Cyclopentadienylringen bezeichnet, und v ist 0 oder 1,
wobei mindestens einer der Reste R⁶ und/oder R⁷ von einem Wasserstoffatom verschieden ist und mindestens einer der Reste R⁶ und/oder R⁷ ein Wasserstoffatom ist.

11. Bis-(enolat) der Formel V 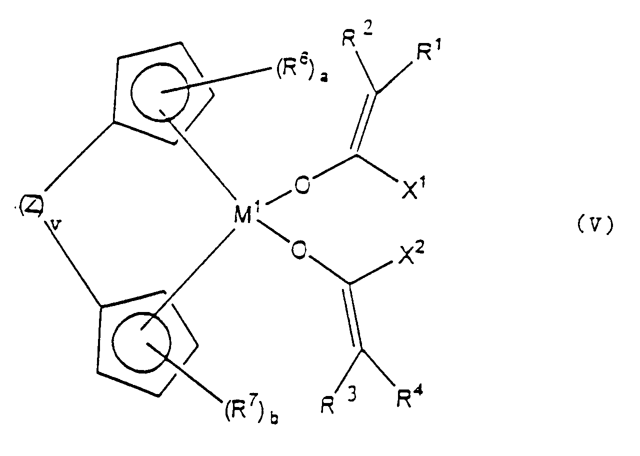 , worin
M¹ ein Metall der III., IV., V. oder VI. Nebengruppe des Periodensystems der Elemente ist, insbesondere Titan, Zirkonium oder Hafnium,
R⁶ gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy, oder zwei oder mehrere Reste R⁶ können so miteinander verbunden sein, daß die Reste R⁶ und die sie verbindenden Atome des Cyclopentadienylringes ein C₄-C₂₄-Ringsystem bilden, welches seinerseits mit C₁-C₂₀-kohlenstoffhaltigen Resten substituiert sein kann,
R⁷ gleich oder verschieden sind und ein Wasserstoffatom, eine SiR⁸₃-Gruppe, worin R⁸ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-c₃₀ - kohlenstoffhaltige Gruppe sind wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C4-C24-Ringsystem bilden, welches seinerseits mit C₁-C₂₀-kohlenstoffhaltigen Resten substituiert sein kann,
R¹, R², R³, R⁴ ein Wasserstoffatom sind,
X¹, X² C₁-C₁₀-Alkyl wie Methyl sind,
a gleich 5 für v = 0, und a gleich 4 für v = 1 ist,
b gleich 5 für v = 0, und b gleich 4 für v = 1 ist,
Z ein verbrückendes Strukturelement zwischen den beiden Cyclopentadienylringen bezeichnet, und v ist 0 oder 1,
und mindestens einer der Reste R⁶ und/oder R⁷ ein Wasserstoffatom ist.
